(19) Europäisches Patentamt
European Patent Office
Office européen des brevets

(11) **EP 3 356 073 B1**

(12) **EUROPÄISCHE PATENTSCHRIFT**

(45) Veröffentlichungstag und Bekanntmachung des Hinweises auf die Patenterteilung:
**07.06.2023   Patentblatt 2023/23**

(21) Anmeldenummer: **16787346.2**

(22) Anmeldetag: **30.09.2016**

(51) Internationale Patentklassifikation (IPC):
**B23D 61/12** (2006.01)

(52) Gemeinsame Patentklassifikation (CPC):
**B23D 61/121**

(86) Internationale Anmeldenummer:
**PCT/EP2016/073450**

(87) Internationale Veröffentlichungsnummer:
**WO 2017/055569 (06.04.2017 Gazette 2017/14)**

(54) **SÄGEBAND MIT EINEM SPANTEILERZAHN**

BAND SAW BLADE HAVING A CHIP-SPLITTING TOOTH

LAME DE SCIE À RUBAN À DENT DIVISEUSE DE COPEAUX

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.10.2015   DE 102015116747**

(43) Veröffentlichungstag der Anmeldung:
**08.08.2018   Patentblatt 2018/32**

(73) Patentinhaber: **WIKUS-Sägenfabrik Wilhelm H. Kullmann GmbH & Co. KG
34286 Spangenberg (DE)**

(72) Erfinder:
• **KULLMANN, Jörg H.
34286 Spangenberg (DE)**
• **HEIMEL, Dirk
34587 Felsberg (DE)**

(74) Vertreter: **REHBERG HÜPPE + PARTNER Patentanwälte PartG mbB
Robert-Gernhardt-Platz 1
37073 Göttingen (DE)**

(56) Entgegenhaltungen:
WO-A1-2006/090828     JP-A- 2009 066 730
JP-U- S56 176 126     US-A- 3 576 200

**EP 3 356 073 B1**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

## TECHNISCHES GEBIET DER ERFINDUNG

Die Erfindung betrifft ein Sägeband aus Metall mit einem Zahntragekörper und einer Mehrzahl von an dem Zahntragekörper angeordneten Zähnen.

Derartige Sägebänder können insbesondere als langgestrecktes Sägeband aus Metall mit einer linearen Anordnung der Zähne hintereinander ausgebildet sein und zum Sägen von Werkstücken aus Metall dienen.

## STAND DER TECHNIK

Ein Sägeband mit einem Zahntragekörper und einer Mehrzahl von an den Zahntragekörper anschließenden Zähnen ist aus der deutschen Patentanmeldung DE 42 00 423 A1 bekannt. Dieses Sägeband ist auch unter der Marke "FUTURA" der Anmelderin bekannt. Die Zähne sind als ungeschränkte positiv konische gefaste Zähne ausgebildet, die sich in einer Höhen- und Breitenstufung in einer Gruppe befinden, die sich entlang des Zahntragekörpers wiederholt. Die Gruppe weist dabei den breitesten und niedrigsten Zahn als Oberflächenzahn und die anderen Zähne als Leistungszähne auf. Somit werden beispielsweise mit vier geometrisch unterschiedlich ausgebildeten Zähnen sieben Schnittkanalabschnitte ausgebildet.

Ein weiteres Sägeband mit einem Zahntragekörper und einer Mehrzahl von an den Zahntragekörper anschließenden Zähnen ist aus der deutschen Patentanmeldung DE 43 00 622 A1 bekannt. Dieses Sägeband ist auch unter der Marke "FUTURA PLUS" der Anmelderin bekannt. Die Zähne sind als ungeschränkte positiv konische gefaste Zähne ausgebildet, die sich in zwei Gruppen befinden, die sich entlang des Zahntragekörpers ineinandergeschachtelt wiederholen. In der ersten Gruppe sind die Zähne in einer Höhen- und Breitenstufung angeordnet und bilden die Leistungszähne. Die Zähne der zweiten Gruppe sind untereinander identisch ausgebildet und stellen die Zähne mit der größten Breite und somit die Oberflächenzähne dar. Somit werden beispielsweise mit vier geometrisch unterschiedlich ausgebildeten Zähnen sieben Schnittkanalabschnitte ausgebildet.

Ein Sägeband mit einem Zahntragekörper und einer Mehrzahl von an den Zahntragekörper anschließenden Zähnen ist aus der deutschen Patentanmeldung DE 197 39 074 A1 bekannt. Dieses Sägeband ist auch unter der Marke "SELEKTA" der Anmelderin bekannt. Die Zähne sind in einer sich entlang des Zahntragekörpers wiederholenden Gruppe angeordnet. Die Gruppe weist eine gerade Anzahl geschränkter Zähne auf, die direkt aufeinander folgen und die Oberflächenzähne bilden. Die Gruppe weist weiterhin einen ungeschränkten Zahn mit der größten Höhe der Zähne auf, der den Leistungszahn bildet. Die verringerte Höhe der Oberflächenzähne wurde durch eine elastisch-plastische Verformung, insbesondere durch Stauchen, erzeugt. Somit werden mit drei geometrisch unterschiedlich ausgebildeten Zähnen drei Schnittkanalabschnitte ausgebildet.

Ein Sägeband mit einem Zahntragekörper und einer Mehrzahl von an den Zahntragekörper anschließenden Zähnen mit genau zwei geometrisch unterschiedlich ausgebildeten Zähnen ist allgemein im Stand der Technik als **Vor- und Nachschneider** bekannt. Beide Arten von Zähnen sind ungeschränkt und symmetrisch zur Längsmittelebene des Zahntragekörpers ausgebildet. Der Vorschneiderzahn ist gefast und weist eine größere Höhe als der Nachschneiderzahn auf. Der Nachschneiderzahn hingegen ist gefast oder ungefast und weist auf der Höhe seiner Schneidkante eine größere Breite als der Vorschneiderzahn auf. Eine solche Zahngeometrie wird auch als "triple chip"-Geometrie bezeichnet, da mit ihr drei Späne entlang der Breite des Schnittkanals abgenommen werden. Es werden also mit zwei geometrisch unterschiedlich ausgebildeten Zähnen drei Schnittkanalabschnitte ausgebildet.

Ein Kreissägeblatt zum Sägen von Metall ist aus der deutschen Patentanmeldung DE 25 16 137 A1 bekannt. Das Kreissägeblatt weist genau zwei geometrisch unterschiedlich ausgebildete Zähne auf. Die Zähne weisen die gleiche Breite und die gleiche Höhe auf und sind unterschiedlich gefast. Sie sind so ausgebildet, dass sich ihre unter einem Winkel von 0° verlaufenden Flanken in der Projektion überdecken.

Ein Kreissägeblatt zum Sägen von nichtmetallischen Werkstücken ist aus der deutschen Patentanmeldung DE 10 2014 205 445 A1 bekannt. Das Kreissägeblatt weist gemäß einer in der dortigen Fig. 4 dargestellten Ausführungsform genau zwei geometrisch unterschiedlich ausgebildete Zähne auf. Die Zähne weisen die gleiche Breite und unterschiedliche Höhen auf und sind so ausgebildet, dass sich ihre unter einem Winkel von 0° verlaufenden Flanken in der Projektion überdecken.

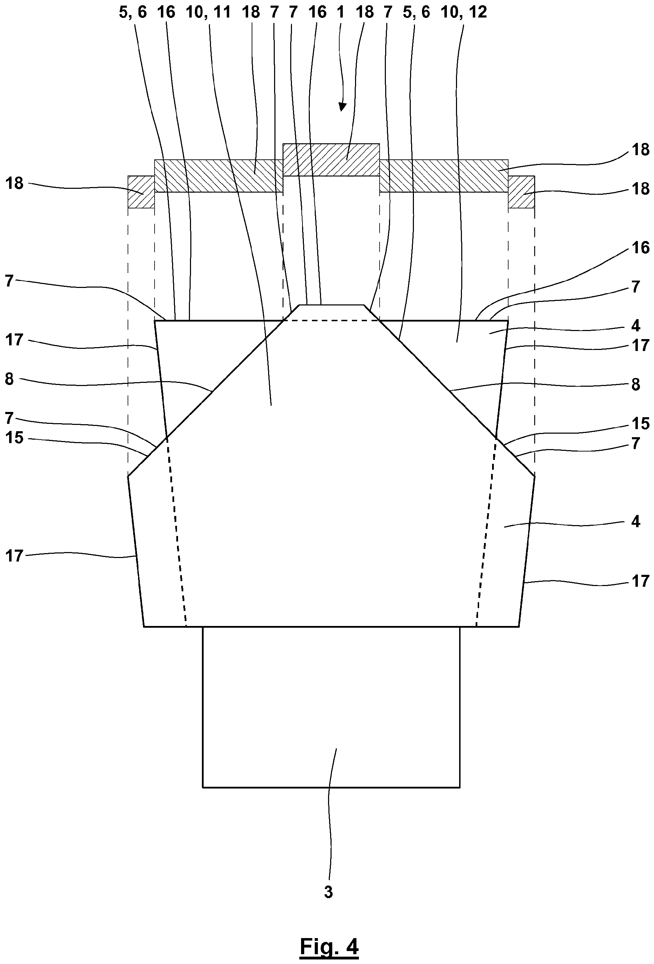

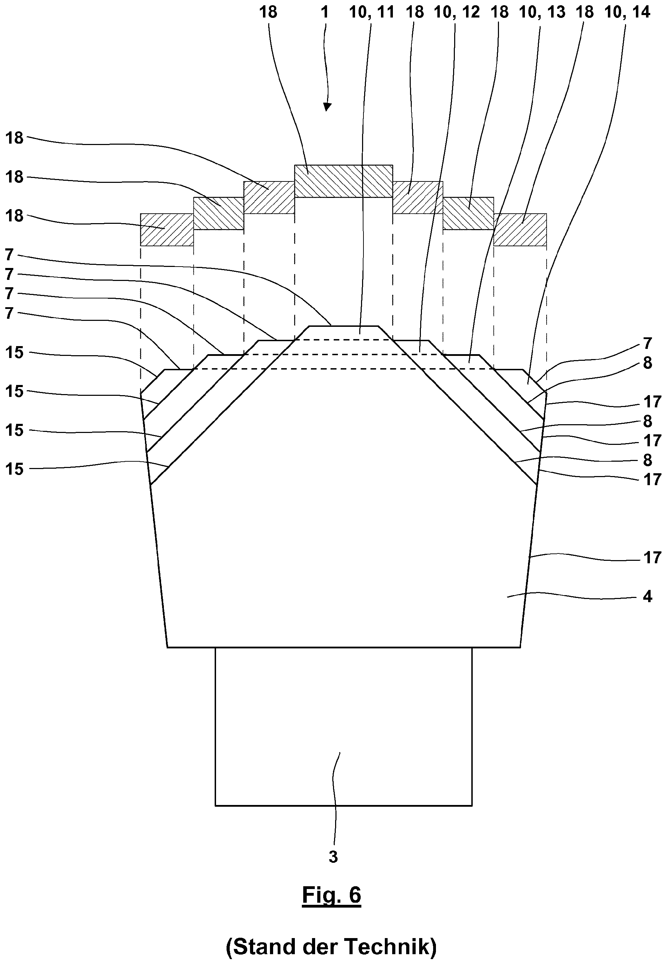

Ein Kreissägeblatt ist aus der japanischen Patentanmeldung JP S56 176126 U bekannt. Die in Fig. 4 gezeigte Ausführungsform des Kreissägeblatts weist zwei geometrisch unterschiedlich ausgebildete Zähne auf. Die Zähne weisen eine unterschiedliche Höhe und eine unterschiedliche Breite auf. Der erste Zahn weist eine größere Höhe auf und ist gefast ausgebildet. Der zweite Zahn ist niedrig und ungefast ausgebildet. Beide Zähne weisen einen Flankenwinkel von etwas mehr als 0° auf. Der zweite Zahn ist so ausgebildet und angeordnet, dass seine Flanke in der Ansicht von vorne gesehen die Fase des ersten Zahns schneidet und die Flanke des ersten Zahns nicht überdeckt. Aus Fig. 6 ist eine weitere Ausführungsform bekannt, bei der drei geometrisch unterschiedlich ausgebildete Zähne an dem Kreissägeblatt angeordnet sind. Die Zähne weisen unterschiedliche Höhen und Breiten auf. Der erste Zahn ist der höchste und breiteste Zahn und gefast. Der zweite Zahn ist der zweithöchste und schmalste Zahn und ungefast. Der dritte Zahn ist der niedrigste und zweibreiteste Zahn und ungefast. Alle Zähne weisen Flankenwinkel auf, die etwas größer als 0° sind. Der zweite Zahn ist so ausgebildet und angeordnet, dass seine Flanke in der Ansicht von vorne gesehen die Fase des ersten Zahns schneidet und die Flanke des ersten Zahns nicht überdeckt. Der dritte Zahn ist so ausgebildet und angeordnet, dass seine Flanke in der Ansicht von vorne gesehen die Fase des ersten Zahns schneidet und die Flanke des ersten Zahns nicht überdeckt. Der zweite Zahn ist weiterhin so ausgebildet, dass seine Flanke in der Ansicht von vorne gesehen die gerade Schneide des dritten Zahns schneidet.

Ein weiteres Kreissägeblatt ist aus dem US-amerikanischen Patent US 3,576,200 A bekannt. Das Kreissägeblatt weist zwei geometrisch unterschiedlich ausgebildete Zähne auf. Der erste Zahn ist der höchste und breiteste Zahn und ist gefast. Der zweite Zahn ist niedriger und schmaler und ungefast. Beide Zähne weisen einen positiven Flankenwinkel auf. Der zweite Zahn ist so ausgebildet und angeordnet, dass seine Flanke in der Ansicht von vorne gesehen die Fase des ersten Zahns schneidet und die Flanke des ersten Zahns nicht überdeckt.

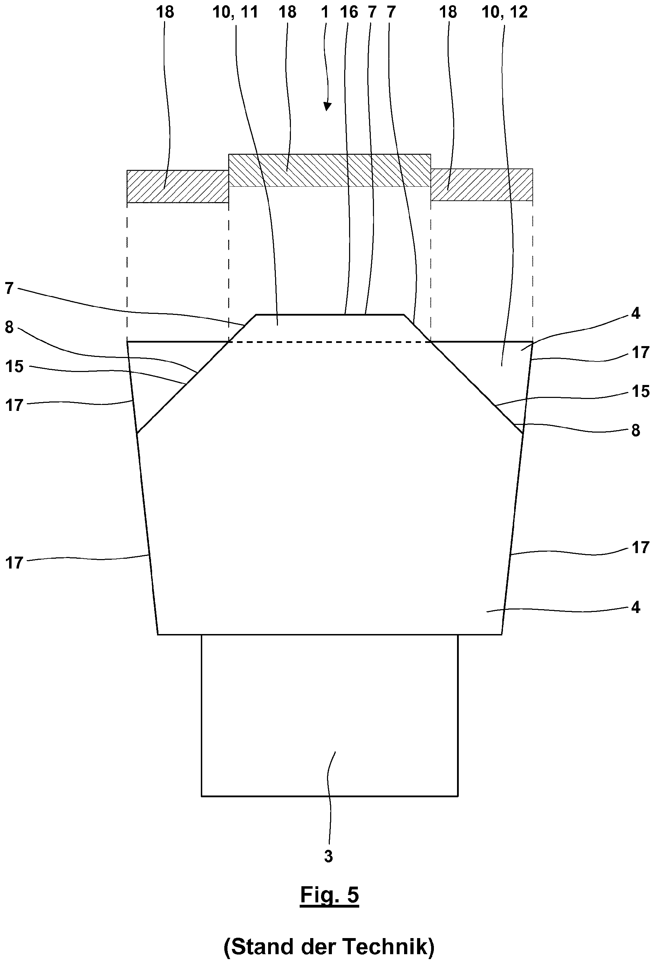

Ein Sägeband ist aus der internationalen Patentanmeldung WO 2006/090828 A1 bekannt. Dieses Dokument zeigt in der Ausführungsform des Sägebands gemäß Fig. 5 die Merkmale des Oberbegriffs des Anspruchs 1. In der in Fig. 5 dargestellten Ausführungsform weist das Sägeband drei geometrisch unterschiedlich ausgebildete Zähne auf. Der erste Zahn ist der höchste Zahn und gefast. Der zweite Zahn ist der zweithöchste Zahn und ungefast. Der dritte Zahn ist der niedrigste Zahn, der breiteste Zahn und ungefast. Alle Zähne weisen einen positiven Flankenwinkel auf. Der zweite Zahn ist so ausgebildet und angeordnet, dass seine Flanke in der Ansicht von vorne gesehen die Fase des ersten Zahns schneidet und die Flanke des ersten Zahns nicht überdeckt.

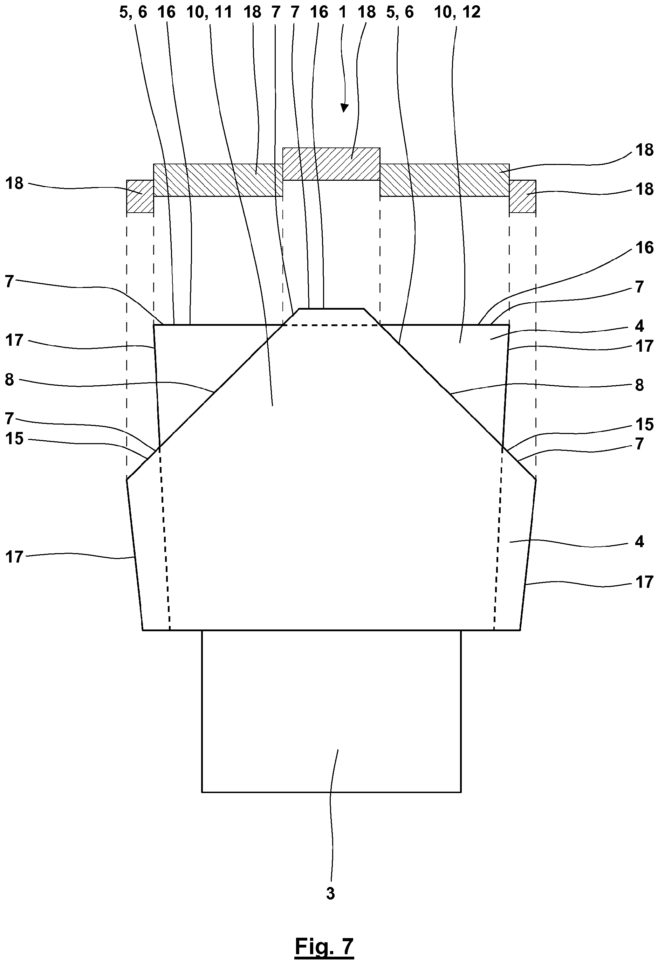

Der dritte Zahn ist so ausgebildet und angeordnet, dass seine Flanke die Fase des ersten Zahns nicht schneidet und die Flanke des ersten Zahns überdeckt. In Fig. 7 ist eine weitere Ausführungsform des Sägebands mit vier geometrisch unterschiedlich ausgebildeten Zähnen dargestellt. Der erste Zahn ist der höchste Zahn und gefast. Der zweite Zahn ist der zweithöchste Zahn und nicht gefast. Der dritte Zahn ist der dritthöchste Zahn und nicht gefast. Der vierte Zahn ist der niedrigste und breiteste Zahn und nicht gefast. Alle Zähne mit Ausnahme des zweiten Zahns weisen einen positiven Flankenwinkel auf. Der zweite Zahn weist einen Flankenwinkel von 0° auf. Der zweite Zahn ist so ausgebildet und angeordnet, dass seine Flanke in der Ansicht von vorne gesehen die Fase des ersten Zahns schneidet und die Flanke des ersten Zahns nicht überdeckt.

Ein Sägeband ist aus der japanischen Patentanmeldung JP 2009 066730 A bekannt. Gemäß der in Fig. 4 dargestellten Ausführungsform weist das Sägeband drei geometrisch unterschiedlich ausgebildete Zähne auf. Der erste Zahn ist der höchste Zahn und gefast.

Der zweite Zahn ist der zweithöchste Zahn und ungefast. Der dritte Zahn ist der niedrigste und breiteste Zahn und ungefast. Der erste Zahn und der dritte Zahn weisen einen positiven Flankenwinkel auf. Der zweite Zahn weist einen negativen Flankenwinkel auf. Der zweite Zahn ist so ausgebildet und angeordnet, dass seine Flanke in der Ansicht von vorne gesehen die Fase des ersten Zahns schneidet und die Flanke des ersten Zahns nicht überdeckt. Der dritte Zahn ist so ausgebildet und angeordnet, dass seine Flanke die Flanke des ersten Zahns überdeckt.

## AUFGABE DER ERFINDUNG

Der Erfindung liegt die Aufgabe zugrunde, ein Sägeband bereitzustellen, das eine hohe Oberflächengüte des gesägten Materials erzeugt, eine hohe Leistungsfähigkeit besitzt und dennoch kostengünstig herstellbar ist.

## LÖSUNG

Die Aufgabe der Erfindung wird erfindungsgemäß mit den Merkmalen des unabhängigen Patentanspruchs 1 gelöst.

Weitere bevorzugte erfindungsgemäße Ausgestaltungen sind den abhängigen Patentansprüchen zu entnehmen.

## BESCHREIBUNG DER ERFINDUNG

Die Erfindung betrifft ein Sägeband gemäß Patentanspruch 1.

### Definitionen

**Schnittkanal**: Unter einem Schnittkanal wird in dieser Anmeldung der in dem zu zersägenden Material durch das Sägeband entstandene Kanal verstanden. Dieser Kanal entsteht durch die Abnahme von Spänen durch die Zähne des Sägebands.

**Schnittkanalabschnitt**: Unter einem Schnittkanalabschnitt wird in dieser Anmeldung ein Teilbereich des Schnittkanals verstanden, in dem ein in Richtung seiner Breite durchgehender Span abgenommen wird. Es handelt sich also um die streifenförmigen Abschnitte, die beispielsweise in Fig. 4 als unterschiedlich schraffierte Bereiche dargestellt sind.

**Wirksamer Schneidkantenabschnitt**: Unter einem wirksamen Schneidkantenabschnitt wird in dieser Anmeldung ein Abschnitt der Schneidkante der Schneide eines Zahns des Sägebands verstanden, der so relativ zu den anderen Zähnen des Sägebands dimensioniert und angeordnet ist, dass er beim Sägen mit dem zu zersägenden Material in Kontakt kommt und somit Späne abnimmt.

**Unwirksamer Schneidkantenabschnitt**: Unter einem unwirksamen Schneidkantenabschnitt wird in dieser Anmeldung dementsprechend ein Abschnitt einer Schneidkante einer Schneide eines Zahns des Sägebands verstanden, der aufgrund seiner Dimensionierung und Anordnung relativ zu den anderen Zähnen beim Sägen nicht mit dem zu zersägenden Material in Kontakt kommt und somit keine Späne abnimmt.

**Oberflächenzahn**: Unter einem Oberflächenzahn wird in dieser Anmeldung ein Zahn des Sägebands verstanden, der für die Ausbildung der Oberflächengüte des gesägten Werkstücks verantwortlich ist.

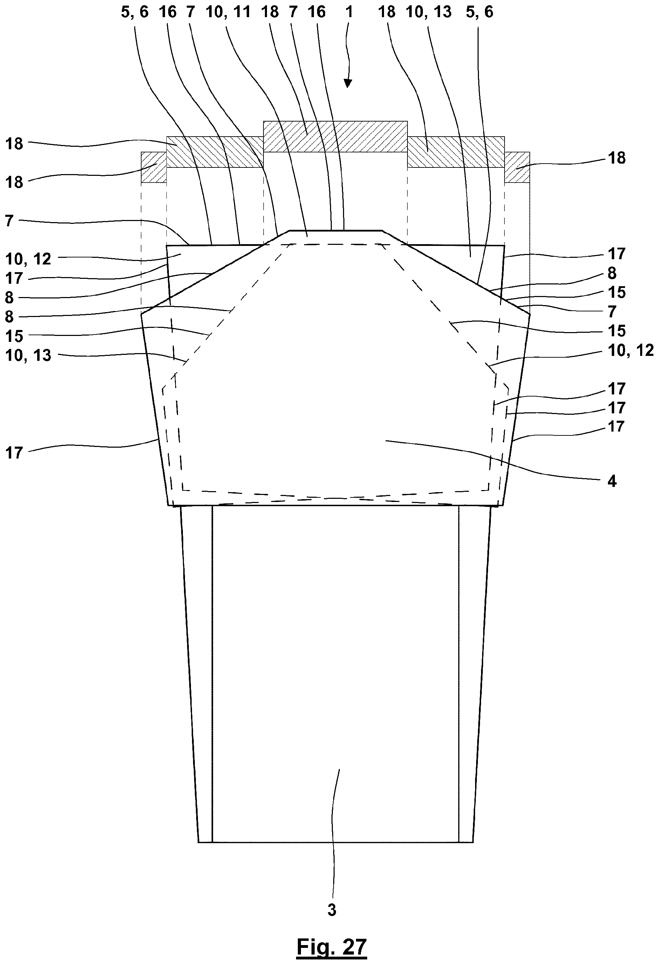

Ein Oberflächenzahn ist also ein Zahn, der in einer Projektion des Sägebands in oder entgegen der Bandlaufrichtung eine äußere seitliche Begrenzung definiert. Wenn es sich bei dem Oberflächenzahn um einen ungeschränkten Zahn handelt, bedeutet dies, dass der Oberflächenzahn der breiteste Zahn ist (siehe z. B. Fig. 4). Wenn es sich bei dem Oberflächenzahn um einen geschränkten Zahn handelt, bedeutet dies, dass die Schränkungsweite so gewählt wurde, dass der geschränkte Zahn in der zuvor beschriebenen Projektion in der zuvor beschriebenen Weise seitlich über die anderen Zähne hervorsteht (siehe z. B. Fig. 27).

**Leistungszahn**: Unter einem Leistungszahn wird in dieser Anmeldung ein Zahn des Sägebands verstanden, der im Gegensatz zu den Oberflächenzähnen im Wesentlichen für die Schnittleistung des Sägebands verantwortlich ist. Ein solcher Zahn ragt also zumindest zu bestimmten Teilen in der Vorschubrichtung des Sägebands gegenüber anderen Zähnen hervor. In der zuvor beschriebenen Projektion in oder entgegen der Bandlaufrichtung (siehe z. B. Fig. 4) handelt es sich bei einem solchen Leistungszahn also um einen Zahn, der Späne in einem inneren Bereich des Schnittkanals abgewandt von dessen Oberfläche abnimmt.

**Spanteilerzahn**: Unter einem Spanteilerzahn wird in dieser Anmeldung ein Zahn des Sägebands verstanden, der zum Teilen, Aufteilen, Unterteilen bzw. Trennen eines Spans entlang seiner Breite in mehrere Späne dient. Die daraus resultierenden Späne weisen also eine geringere Breite auf. Ein solcher Spanteilerzahn kann auch als Spanbreitenteilerzahn, Spanaufteilungszahn, Spanbreitenaufteilungszahn, Spantrennzahn, Spanunterbrecherzahn, Schnittkanalteilerzahn, Schnittkanalabschnittsteilerzahn, Schnittkanalabschnittsbilderzahn, Quintupelzahn oder TAURUS®-Zahn bezeichnet werden.

**Positiv konischer Zahn**: Unter einem positiv konischen Zahn wird in dieser Anmeldung ein Zahn des Sägebands verstanden, der in der Projektion in oder entgegen der Bandlaufrichtung, wie diese beispielsweise in Fig. 4 dargestellt ist, eine sich nach unten verjüngende Keilform besitzt, so dass seine Flanken unter einem positiven Freiwinkel zur Vertikalen angeordnet sind und daher einem Verklemmen des Zahns und somit des Sägebands im Schnittkanal entgegengewirkt wird.

**Zahntragekörper**: Unter dem Zahntragekörper wird in dieser Anmeldung der Teil des Sägebands verstanden, an dem die Zähne des Sägebands angeordnet sind. Oftmals wird in diesem Zusammenhang auch von dem "Grundkörper" des Sägebands gesprochen. Der Begriff "Zahntragekörper" soll jedoch besser zum Ausdruck bringen, dass es sich um den Teil des Sägebands handelt, der selbst nicht als Zahn bezeichnet werden kann, an dem aber die Zähne angeordnet sind. Dabei ist zu beachten, dass hier Unterschiede zwischen der funktionsmäßigen und der materialmäßigen Unterscheidung zwischen Zahntragekörper und Zähnen bestehen. Funktionsmäßig beginnt der Zahn mit seiner Zahnbasis im Bereich des Zahngrunds. Diese Zahnbasis besteht jedoch oftmals aus demselben Werkstoff wie der Zahntragekörper und ist einstückig mit diesem ausgebildet. Anders gesagt erfüllt ein Teil dieses Werkstoffs die Funktion des Zahntragekörpers und ein anderer Teil die Funktion der Zahnbasis und somit des Zahns. Die materialmäßige Trennung liegt dann erst weiter abgewandt vom Zahntragekörper im Bereich der Zahnspitze vor.

**Nummerierende Bezugnahme**: Die Bezugnahme auf die Zähne oder andere Merkmale im Sinne von "erster Zahn", "zweiter Zahn", "erste Anzahl", "zweite Anzahl", "erste Richtung", "zweite Richtung" usw. dient zunächst lediglich zur Unterscheidung der Zähne bzw. anderer Merkmale voneinander und besagt nicht zwangsläufig, in welcher Reihenfolge sie an dem Sägeband angeordnet sind. Eine dadurch offenbarte Möglichkeit ist es allerdings, dass die Zähne genau in dieser Reihenfolge - gegebenenfalls unter Zwischenanordnung weiterer Zähne - angeordnet sind.

## Weitere Beschreibung

Es wird ein Sägeband bereitgestellt, welches mit einer vergleichsweise geringen Anzahl geometrisch unterschiedlich ausgebildeter und/oder angeordneter Zähne pro Gruppe beim Sägen eine vergleichsweise hohe Anzahl von Schnittkanalabschnitten ausbildet. Die Anzahl von Schnittkanalabschnitten pro Zahn ist also erhöht.

Hierdurch sind die Herstellungskosten des neuen Sägebands im Vergleich zu einem Sägeband mit einer größeren Anzahl geometrisch unterschiedlich ausgebildeter Zähne reduziert. Gleichzeitig sind aber die Eigenschaften des Sägebands im Vergleich zu einem Sägeband des Stands der Technik mit einer übereinstimmenden Anzahl geometrisch unterschiedlich ausgebildeter Zähne verbessert. Diese Vorteile werden durch die geschickte Ausbildung und Anordnung mindestens eines Spanteilerzahns in der jeweiligen Zahngruppe erreicht.

Der Spanteilerzahn bewirkt, dass ein Schneidkantenabschnitt eines geometrisch unterschiedlich ausgebildeten anderen Zahns in der Gruppe in unterschiedliche wirksame und unwirksame Schneidkantenabschnitte unterteilt wird. Durch den Spanteilerzahn erzeugt dieser andere Zahn damit eine größere Anzahl von Spänen entlang der Breite des Schnittkanals.

Die Herstellungskosten sind gegenüber einem Sägeband gemäß der Vor- und Nachschneidertechnik nicht erhöht. Dies liegt daran, dass die Anzahl der durchzuführenden Schliffe an den Zähnen nicht oder nur wenig erhöht wurde. Somit liegen die Herstellungskosten unter denen eines Sägebands des Stands der Technik gemäß der Gruppentechnik.

Durch den Spanteilerzahn ergibt sich eine erhöhte Schnittleistung, ein verbessertes Anschnittverhalten, ein guter Geradeauslauf, ein verbessertes Schwingungsverhalten, eine geringere Geräuschemission und eine erhöhte Oberflächengüte. Das Anschnittverhalten ist insbesondere verbessert, da der erste Zahn (der Nicht-Spanteilerzahn) als kombinierter Leistungs- und Oberflächenzahn und als Zahn mit der größten Höhe ausgebildet ist. Durch seine wirksame Schneidkante fungiert er in der Mitte des Schnittkanals als Führungszahn. Er weist gleichzeitig die größte Breite der Zähne auf und definiert somit die Breite des Schnittkanals. Somit ist das Sägeband unempfindlich gegen Auslenkungen.

Unter dem ersten Zahn kann insbesondere der höchste Zahn in der Gruppe verstanden werden. Unter dem zweiten Zahn kann insbesondere der zweithöchste Zahn in der Gruppe verstanden werden usw. Die Zähne können aber auch gemäß ihrer Anordnung in der jeweiligen Zeichnung bezeichnet sein. Dabei kann dann insbesondere der vorderste Zahn als erster Zahn, der direkt dahinter angeordnete Zahn als zweiter Zahn usw. bezeichnet werden. Dabei ist auch zu berücksichtigen, dass grundsätzlich die Reihenfolge der Zähne innerhalb einer Gruppe frei wählbar ist.

Der unwirksame Schneidkantenabschnitt des ersten Zahns (des Nicht-Spanteilerzahns) wird durch einen dort angeordneten zweiten Zahn hervorgerufen. Der zweite Zahn ist also als Spanteilerzahn in Bezug auf den ersten Zahn ausgebildet. Der Spanteilerzahn überdeckt diesen Bereich der Schneidkante des ersten Zahns und weist dort selbst einen wirksamen Schneidkantenabschnitt auf. Da alle Schneidkantenabschnitte ohne Unterbrechung nebeneinander entlang der Breite des Schnittkanals angeordnet sind, bildet ihre Summe die Gesamtbreite des Schnittkanals. Jeder Schnittkanalabschnitt wird durch einen wirksamen Schneidkantenabschnitt eines Zahns oder mehrerer Zähne gebildet. Durch den neuen Spanteilerzahn bzw. die neuen Spanteilerzähne entsteht eine größere Anzahl von Schnittkanalabschnitten pro Zahn. Dies bedeutet auch, dass die Breite mindestens eines Teils der Schnittkanalabschnitte reduziert ist.

Der Nicht-Spanteilerzahn ist gefast ausgebildet. Dies bedeutet, dass er an mindestens einer Seite mindestens eine Fase aufweist. Vorzugsweise weist er an beiden Seiten jeweils eine Fase auf. Diese können symmetrisch oder asymmetrisch ausgebildet sein.

Der Spanteilerzahn kann ungefast ausgebildet sein. Hierdurch ist der Fertigungsaufwand für seine Herstellung wesentlich reduziert, da das Schleifen der Fasen entfällt. Es ist aber ebenfalls möglich, dass der Spanteilerzahn gefast ausgebildet ist.

Alle Zähne in der Gruppe mit Ausnahme eines Zahns können ungefast ausgebildet sein. Hierdurch ist der Schleifaufwand minimiert.

Der Spanteilerzahn kann ungeschränkt ausgebildet sein. Wenn nur zwei geometrisch unterschiedlich ausgebildete Zähne in der Gruppe vorhanden sind, was nicht von den Gegenständen der Patentansprüche umfasst ist, ist der Spanteilerzahn symmetrisch zur Längsmittelebene ausgebildet. Wenn aber drei geometrisch unterschiedlich ausgebildete Zähne in der Gruppe vorhanden sind, kann der Spanteilerzahn auch asymmetrisch zur Längsmittelebene ausgebildet sein. Der dritte Zahn ist dann ebenfalls ein Spanteilerzahn und asymmetrisch und spiegelsymmetrisch zu dem anderen Spanteilerzahn ausgebildet und angeordnet. Je nach Anordnung bilden die beiden Spanteilerzähne dabei gemeinsam funktional nur einen Spanteilerzahn.

Der Spanteilerzahn ist so ausgebildet und angeordnet, dass seine Flanke in der Ansicht von vorne gesehen (d. h. in der Projektion entgegen der Bandlaufrichtung) die Fase des Nicht-Spanteilerzahns schneidet und die Flanke des Nicht-Spanteilerzahns nicht schneidet. Dies bedeutet insbesondere, dass der Spanteilerzahn weniger breit als der Nicht-Spanteilerzahn ausgebildet ist. Hierdurch entsteht links und rechts außen im Schnittkanal Platz für jeweils einen durch den Nicht-Spanteilerzahn erzeugten Span (d. h. die Späne eins und zwei). Nach innen gesehen folgt dann jeweils ein weiterer Span, der im Wesentlichen durch die Fase des Nicht-Spanteilerzahns erzeugt wird (d. h. die Späne drei und vier). Ganz innen entsteht ein fünfter Span, der im Wesentlichen durch den geraden Schneidkantenabschnitt des Leistungszahns mit der größten Höhe gebildet wird.

Der Spanteilerzahn weist einen positiven Flankenwinkel auf. Es handelt sich also um einen positiv konischen Zahn, d. h. einen Zahn, der von der Zahnspitze in Richtung des Zahntragekörpers gesehen schmaler wird. Hierdurch wird ein Verklemmen des Zahns im Schnittkanal verhindert.

Die Zähne sind in einer sich entlang des Zahntragekörpers wiederholenden Gruppe angeordnet. Dabei kann eine konstante Teilung in dem Sinne vorliegen, dass sowohl die Abstände zwischen den Zähnen einer Gruppe als auch die Abstände zwischen den Gruppen konstant sind. Diese Abstände können gleich oder unterschiedlich sein. Es kann aber auch eine variable Teilung in dem Sinne vorliegen, dass die Abstände zwischen den Zähnen einer Gruppe und/oder die Abstände zwischen den Gruppen unterschiedlich sind.

Die Gruppe weist nur drei geometrisch unterschiedlich ausgebildete Zähne auf. Es gibt also nur drei verschiedene Arten von Zähnen in der Gruppe. Diese Gruppe ist wiederholt an dem Sägeblatt angeordnet. Es ist dabei möglich, dass an dem Sägeband noch andere Gruppen angeordnet sind, die eine größere Anzahl unterschiedlich ausgebildeter Zähne aufweisen.

Mit drei geometrisch unterschiedlich ausgebildeten Zähnen in der Gruppe, von denen zwei Zähne als Spanteilerzahn ausgebildet sind, können neun Schnittkanalabschnitte gebildet werden.

Die maximale Anzahl der Schnittkanalabschnitte und dementsprechend der Späne lässt sich mittels der folgenden Gleichung bestimmen:

$$S = 2G - 1 + 2T$$

Dabei gilt Folgendes:

S = Anzahl der Schnittkanalabschnitte pro Gruppe,
G = Gesamtzahl der Zähne in der Gruppe,
T = Anzahl der Spanteilerzähne in der Gruppe.

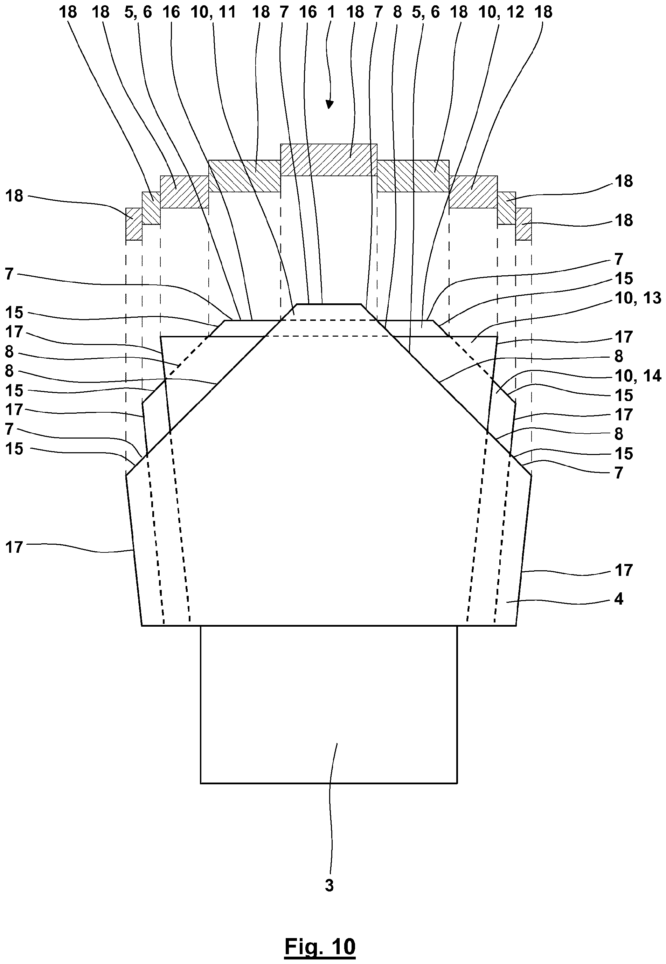

Der zweite Zahn ist als Spanteilerzahn in Bezug auf den ersten Zahn und der dritte Zahn als Spanteilerzahn in Bezug auf den zweiten Zahn ausgebildet (siehe Fig. 10). Dies bedeutet, dass der Spanteilerzahn jeweils eine funktionsmäßige Aufteilung des Schneidkantenabschnitts des jeweils anderen Zahns derart übernimmt, dass ein erster Teil einen wirksamen Schneidkantenabschnitt, ein anschließender zweiter Teil einen unwirksamen Schneidkantenabschnitt und ein daran anschließender dritter Teil einen wirksamen Schneidkantenabschnitt darstellt.

Da der dritte Zahn als Spanteilerzahn für den zweiten Zahn - und dieser wiederum als Spanteilerzahn für den ersten Zahn - ausgebildet ist, werden neun Schnittkanalabschnitte ausgebildet (siehe Fig. 10).

Zwei der Zähne in der Gruppe können geschränkt sein. Dabei handelt es sich insbesondere um den zweiten und den dritten Zahn, während der erste Zahn ungeschränkt ausgebildet ist. Einer der geschränkten Zähne ist dann nach links und der andere Zahn nach rechts geschränkt.

Der Spanteilerzahn weist eine geringere maximale Höhe und Breite als der Nicht-Spanteilerzahn auf. Der Nicht-Spanteilerzahn weist die größte maximale Höhe und die größte maximale Breite auf. Er ist somit ein kombinierter Leistungs- und Oberflächenzahn.

Das Sägeblatt weist einen ersten gefasten Zahn und einen zweiten Zahn auf, wobei der zweite Zahn so ausgebildet und angeordnet ist, dass seine Flanke in der Ansicht von vorne gesehen die Fase des ersten Zahns schneidet.

Der zweite Zahn kann so ausgebildet und angeordnet sein, dass seine Flanke in der Ansicht von vorne gesehen die Fase des ersten Zahns in einem Abstand von dem benachbarten äußeren Ende der Schneidkante des ersten Zahns in Richtung der Breite des Schnittkanals schneidet, die mindestens 5 %, insbesondere mindestens 6,5 %, insbesondere mindestens 8 %, insbesondere etwa 10 % und/oder maximal 18 %, insbesondere maximal 18,5 %, insbesondere maximal 20 % der Breite des Schnittkanals entspricht. Der Abstand ist also so bemessen, dass der von dem zweiten Zahn nicht überdeckte Bereich der wirksamen Schneidkante des ersten Zahns zur Ausbildung eines Spans in einer geeigneten Breite dient.

Das Sägeband dient insbesondere zum Sägen von Werkstücken aus Metall oder Metalllegierungen. Es ist aber auch möglich, andere Werkstoffe - insbesondere Holz, Kunststoff, carbonfaserverstärkten Kunststoff (CFK) und andere Verbundstoffe - mit einem derartigen Sägeband zu sägen.

Die Zähne des Sägebands weisen Schneiden mit geometrisch bestimmter Schneidenform auf (im Unterschied zu Schneiden mit geometrisch unbestimmter Schneidenform; vgl. DIN 8580).

Der Zahntragekörper und die Zahnbasis bestehen aus Metall, insbesondere Stahl.

Die Schneide und zumindest ein weiterer Teil der Zahnspitze der Zähne bestehen ebenfalls aus Metall. Das Material ist härter als das Material des Zahntragekörpers und der Zahnbasis, wodurch sich das Sägeband insgesamt besonders gut zum Sägen von Metallwerkstoffen eignet. Bei dem Material kann es sich z. B. um einen Schnellarbeitsstahl (HSS) handeln, d. h. einen legierten Werkzeugstahl mit Wolfram, Molybdän, Vanadium, Kobalt, Nickel und/oder Titan als Legierungselement. Möglich sind aber auch andere Schneidstoffe, wie z. B. Hartmetall, keramische Schneidstoffe und Diamant. Unter Hartmetallen versteht man gesinterte Carbidhartmetalle. Häufig weisen diese Wolframcarbid als Hartstoff und Kobalt als Binder auf. Andere Hartmetalle weisen Titancarbid und Titannitrid als Hartstoffe und Nickel, Cobalt und Molybdän als Binder auf und werden als Cermets bezeichnet.

Die Schneide und ggf. ein weiterer Teil der Zahnspitze der Zähne können eine Hartstoffschicht aufweisen, die zu einer Erhöhung der Verschleißfestigkeit der Zähne führt.

Die größere Härte der Zähne bzw. Zahnspitzen im Vergleich zum Zahntragekörper kann insbesondere durch Einsätze erreicht werden, die an Vorsprüngen an dem Zahntragekörper befestigt sind. Diese Einsätze bewirken, dass eine im Vergleich zum Material des Vorsprungs und des Zahntragekörpers erhöhte Härte und Verschleißfestigkeit erreicht wird. Die Einsätze sind als Formkörper ausgebildet, die als separate Elemente hergestellt und anschließend dauerhaft mit den Vorsprüngen - insbesondere durch Schweißen oder Löten - verbunden werden. Es kann sich bei dem Sägeband aber auch stattdessen um ein Bimetallsägeband handeln.

Mindestens ein Teil der Zähne kann einen Spanwinkel von etwa 10° oder mehr, insbesondere etwa 12° oder mehr, und/oder einen Freiwinkel von etwa 18° oder mehr, insbesondere etwa 20° oder mehr, aufweisen. Hierdurch ergibt sich eine Verschlankung des Schneidkeils, der dadurch aggressiver wird. Die Schnittkräfte werden reduziert und es wird einer Kaltverfestigung des Materials des zu sägenden Werkstücks entgegengewirkt. Durch den vergrößerten Spanwinkel muss weniger Spanumformarbeit verrichtet werden. Durch den vergrößerten Freiwinkel werden die Reibkräfte im Zerspanprozess reduziert.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einer Fase die Rede ist, ist dies so zu verstehen, dass genau eine Fase, zwei Fasen oder mehr Fasen vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

**KURZBESCHREIBUNG DER FIGUREN**

**Fig. 1**      zeigt eine Seitenansicht einer ersten beispielhaften Ausführungsform eines neuen Sägebands, die nicht von den Gegenständen der Patentansprüche umfasst ist.

**Fig. 2**      zeigt das Sägeband gemäß Fig. 1 in einer Draufsicht.

**Fig. 3**      zeigt das Sägeband gemäß Fig. 1 in einer Vorderansicht.

**Fig. 4**      zeigt das Sägeband gemäß Fig. 1 in einer Vorderansicht unter Darstellung der Schnittkanalabschnitte.

**Fig. 5**      zeigt ein Sägeband des Stands der Technik gemäß der Vor- und Nachschneidertechnik in einer Vorderansicht unter Darstellung der Schnittkanalabschnitte.

**Fig. 6**      zeigt ein Sägeband des Stands der Technik gemäß der Gruppentechnik in einer Vorderansicht unter Darstellung der Schnittkanalabschnitte.

**Fig. 7**      zeigt eine zweite beispielhafte Ausführungsform des neuen Sägebands, die nicht von den Gegenständen der Patentansprüche umfasst ist, in einer Vorderansicht unter Darstellung der Schnittkanalabschnitte.

**Fig. 8**      zeigt eine dritte beispielhafte Ausführungsform des neuen Sägebands, die nicht von den Gegenständen der Patentansprüche umfasst ist, in einer Vorderansicht unter Darstellung der Schnittkanalabschnitte.

**Fig. 9**      zeigt eine vierte beispielhafte Ausführungsform des neuen Sägebands, die nicht von den Gegenständen der Patentansprüche umfasst ist, in einer Vorderansicht unter Darstellung der Schnittkanalabschnitte.

**Fig. 10**      zeigt eine fünfte beispielhafte Ausführungsform des neuen Sägebands in einer Vorderansicht unter Darstellung der Schnittkanalabschnitte.

**Fig. 11**      zeigt eine sechste beispielhafte Ausführungsform des neuen Sägebands, die nicht von den Gegenständen der Patentansprüche umfasst ist, in einer Vorderansicht unter Darstellung der Schnittkanalabschnitte.

**Fig. 12**      zeigt eine siebte beispielhafte Ausführungsform des neuen Sägebands, die nicht von den Gegenständen der Patentansprüche umfasst ist, in einer Vorderansicht unter Darstellung der Schnittkanalabschnitte.

**Fig. 13**      zeigt eine achte beispielhafte Ausführungsform des neuen Sägebands, die nicht von den Gegenständen der Patentansprüche umfasst ist, in einer Vorderansicht unter Darstellung der Schnittkanalabschnitte.

**Fig. 14**      zeigt eine neunte beispielhafte Ausführungsform des neuen Sägebands, die nicht von den Gegenständen der Patentansprüche umfasst ist, in einer Vorderansicht unter Darstellung der Schnittkanalabschnitte.

**Fig. 15**      zeigt eine zehnte beispielhafte Ausführungsform des neuen Sägebands, die nicht von den Gegenständen der Patentansprüche umfasst ist, in einer Vorderansicht unter Darstellung der Schnittkanalabschnitte.

**Fig. 16**      zeigt eine elfte beispielhafte Ausführungsform des neuen Sägebands, die nicht von den Gegenständen der Patentansprüche umfasst ist, in einer Vorderansicht unter Darstellung der Schnittkanalabschnitte.

**Fig. 17**      zeigt eine zwölfte beispielhafte Ausführungsform des neuen Sägebands, die nicht von den Gegenständen der Patentansprüche umfasst ist, in einer Vorderansicht unter Darstellung der Schnittkanalabschnitte.

Fig. 18    zeigt eine dreizehnte beispielhafte Ausführungsform des neuen Sägebands, die nicht von den Gegenständen der Patentansprüche umfasst ist, in einer Vorderansicht unter Darstellung der Schnittkanalabschnitte.

Fig. 19    zeigt eine vierzehnte beispielhafte Ausführungsform des neuen Sägebands, die nicht von den Gegenständen der Patentansprüche umfasst ist, in einer Vorderansicht unter Darstellung der Schnittkanalabschnitte.

Fig. 20    zeigt eine fünfzehnte beispielhafte Ausführungsform des neuen Sägebands, die nicht von den Gegenständen der Patentansprüche umfasst ist, in einer Vorderansicht unter Darstellung der Schnittkanalabschnitte.

Fig. 21    zeigt eine sechzehnte beispielhafte Ausführungsform des neuen Sägebands, die nicht von den Gegenständen der Patentansprüche umfasst ist, in einer Vorderansicht unter Darstellung der Schnittkanalabschnitte.

Fig. 22    zeigt eine siebzehnte beispielhafte Ausführungsform des neuen Sägebands, die nicht von den Gegenständen der Patentansprüche umfasst ist, in einer Vorderansicht unter Darstellung der Schnittkanalabschnitte.

Fig. 23    zeigt eine achtzehnte beispielhafte Ausführungsform des neuen Sägebands, die nicht von den Gegenständen der Patentansprüche umfasst ist, in einer Vorderansicht unter Darstellung der Schnittkanalabschnitte.

Fig. 24    zeigt eine neunzehnte beispielhafte Ausführungsform des neuen Sägebands, die nicht von den Gegenständen der Patentansprüche umfasst ist, in einer Vorderansicht unter Darstellung der Schnittkanalabschnitte.

Fig. 25    zeigt eine Seitenansicht einer zwanzigsten beispielhaften Ausführungsform des neuen Sägebands, die nicht von den Gegenständen der Patentansprüche umfasst ist.

Fig. 26    zeigt das Sägeband gemäß Fig. 25 in einer Draufsicht.

Fig. 27    zeigt das Sägeband gemäß Fig. 25 in einer Vorderansicht unter Darstellung der Schnittkanalabschnitte.

Fig. 28    zeigt eine Seitenansicht einer einundzwanzigsten beispielhaften Ausführungsform des neuen Sägebands, die nicht von den Gegenständen der Patentansprüche umfasst ist.

Fig. 29    zeigt das Sägeband gemäß Fig. 28 in einer Draufsicht.

Fig. 30    zeigt das Sägeband gemäß Fig. 28 in einer Vorderansicht unter Darstellung der Schnittkanalabschnitte.

Fig. 31    zeigt eine zweiundzwanzigste beispielhafte Ausführungsform des neuen Sägebands, die nicht von den Gegenständen der Patentansprüche umfasst ist, in einer Vorderansicht unter Darstellung der Schnittkanalabschnitte.

Fig. 32    zeigt eine dreiundzwanzigste beispielhafte Ausführungsform des neuen Sägebands, die nicht von den Gegenständen der Patentansprüche umfasst ist, in einer Vorderansicht unter Darstellung der Schnittkanalabschnitte.

## FIGURENBESCHREIBUNG

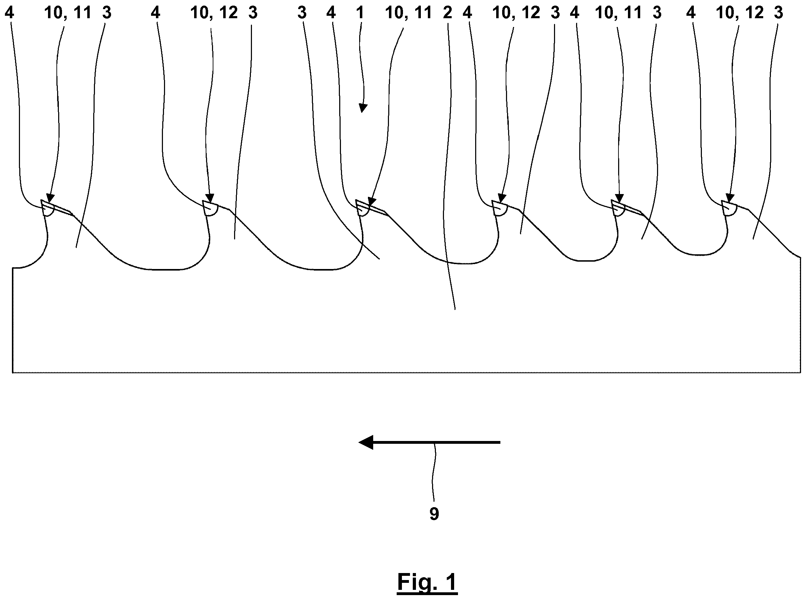

Die **Fig. 1 bis 4** zeigen verschiedene Ansichten einer ersten beispielhaften Ausführungsform des Sägebands 1.

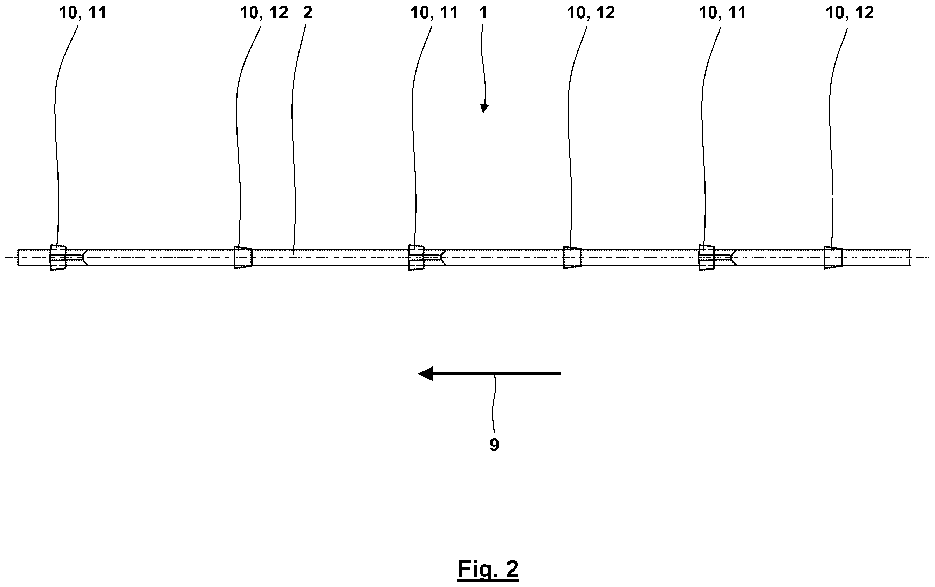

Es versteht sich, dass die Figuren nur einen Ausschnitt aus dem Sägeband 1 zeigen, welches sich in der Darstellung der Fig. 1 sowohl weiter nach links und rechts als auch weiter nach unten und in der Darstellung der Fig. 2 weiter nach links und rechts erstreckt. Die vertikalen Linien ganz links und ganz rechts in Fig. 1 und Fig. 2 sowie die horizontale Linie über dem Pfeil in Fig. 1 sind also lediglich Abbruchlinien. Die Darstellungen der Fig. 1 und 2 sind maßstabsgerecht im Maßstab 1:3.

Das Sägeband 1 ist als langgestrecktes Sägeband 1 mit einer Bandlaufrichtung 9 ausgebildet. Das Sägeband 1 selbst besteht aus Metall und dient zum Sägen von Metall. Es könnte aber auch aus einem anderen Material bestehen und/oder zum Sägen anderer Werkstoffe dienen.

Das Sägeband 1 weist einen Zahntragekörper 2 auf, von dem nur ein Ausschnitt sichtbar ist. Der Zahntragekörper 2 besitzt eine Mehrzahl von Vorsprünge 3, an denen jeweils ein Einsatz 4 befestigt ist. Der Vorsprung 3 mit dem Einsatz 4 bildet einen Zahn 10 mit einer Schneide 5. Der Einsatz 4 besteht aus einem Material, das härter als das Material der Vorsprünge 3 und des Zahntragekörpers 2 des Sägebands 1 ist. Vorzugsweise handelt es sich bei dem Material des Einsatzes 4 um Hartmetall. Es könnte sich aber auch um ein anderes geeignetes Material handeln. Die Einsätze 4 sind mit dem jeweiligen zugeordneten Vorsprung 3 - insbesondere durch Löten oder Schweißen - fest verbunden. Das Sägeband 1 könnte jedoch auch beispielsweise als Bimetallsägeband ausgebildet sein.

Das Sägeblatt 1 weist zwei geometrisch unterschiedlich ausgebildete Zähne 10 in der Gruppe auf. Die Zähne 10 sind in der Gruppe mit einer konstanten Teilung angeordnet. Die Gruppe wird dann entlang der Länge des Sägebands 1 mit einer konstanten Teilung wiederholt. Es könnten aber auch variable Teilungen Anwendung finden.

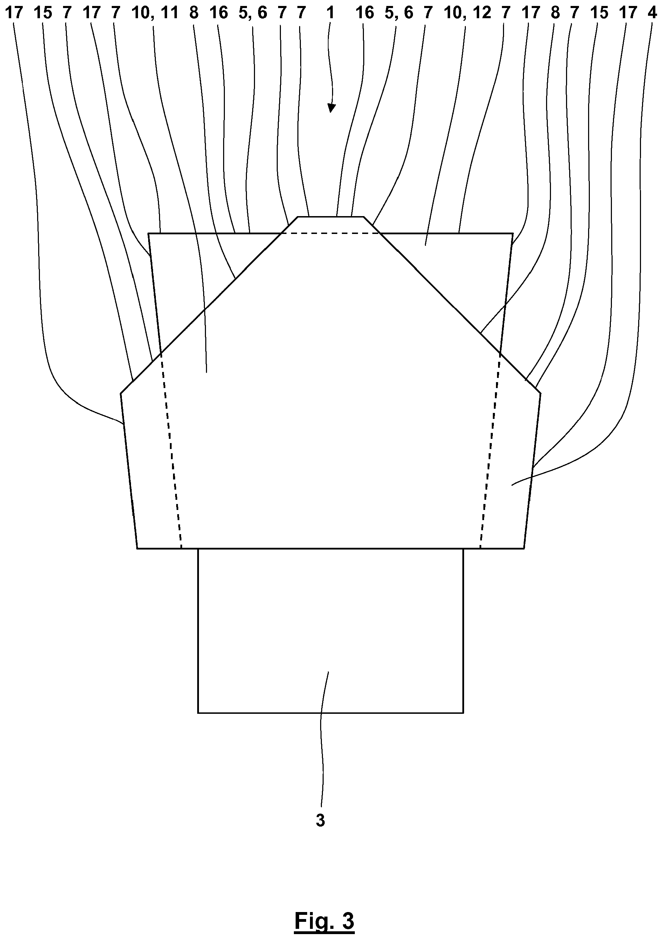

Die Ausbildung der Zähne 10 des Sägebands 1 ist besonders gut in den Fig. 3 und 4 erkennbar. Diese Figuren zeigen jeweils die Vorderansicht des Sägebands 1. Diese Vorderansicht entspricht der Projektion des Sägebands 1 entgegen der Bandlaufrichtung 9. In dieser Ansicht überdecken sich die Zähne 10, so dass nur wenige Zähne 10 - bei diesem Beispiel nur zwei Zähne 10 - sichtbar sind. Es versteht sich aber, dass vor und hinter diesen Zähnen 10 weitere Zähne 10 angeordnet sind, wie dies den Fig. 1 und 2 zu entnehmen ist.

Die Zähne 10 weisen jeweils eine Schneide 5 auf, von der in den Ansichten der Fig. 3 und 4 nur die Schneidkante 6 sichtbar ist. Die Schneidkanten 6 wiederum weisen verschiedene Abschnitte auf. Ein derartiger Abschnitt wird als wirksamer Schneidkantenabschnitt 7 bezeichnet, wenn er beim Sägen mit dem zu zersägenden Material in Kontakt kommt. Wenn dies nicht der Fall ist, da der jeweilige Abschnitt von einem Abschnitt eines anderen Zahns 10 in der Projektion überdeckt wird, handelt es sich um einen unwirksamen Schneidkantenabschnitt 8.

In dem vorliegenden Beispiel weist das Sägeband 1 zwei geometrisch unterschiedlich ausgebildete Zähne 10 in der Gruppe auf.

Bei dem ersten Zahn 11 handelt es sich um einen gefasten Zahn 10 mit zwei Fasen 15, die einen Teil der Schneidkante 6 bilden und symmetrisch zur Längsmittelebene an einen geraden Abschnitt 16 der Schneidkante 6 anschließen. Im vorliegenden Fall beträgt der Fasenwinkel etwa 45°. Die Fasen 15 könnten aber auch eine andere Neigung besitzen, z. B. etwa zwischen 50° und 20°, insbesondere etwa 30°. Weiter in Richtung nach unten gesehen schließen an die Fasen 15 jeweils Flanken 17 an. Die Flanken 17 weisen einen Flankenwinkel von etwa 6° auf. Sie könnten aber auch einen anderen Flankenwinkel besitzen, z. B. etwa zwischen 2° und 8°, insbesondere etwa 3°. Der erste Zahn 11 ist als kombinierter Leistungs- und Oberflächenzahn und als positiv konischer Zahn ausgebildet.

Die Zahngruppe weist weiterhin einen zweiten Zahn 12 auf. Der zweite Zahn 12 ist in diesem Fall ungefast ausgebildet, so dass seine Flanken 17 unmittelbar an den geraden Abschnitt 16 der Schneidkante 6 anschließen. Der Flankenwinkel beträgt hier ebenfalls etwa 6°. Es könnte aber auch ein anderer Flankenwinkel gewählt sein. Der zweite Zahn 12 ist als Leistungszahn, positiv konischer Zahn und Spanteilerzahn ausgebildet.

Die durch das Zusammenwirken des ersten Zahns 11 und des zweiten Zahns 12 geleistete Schnittarbeit ist besonders gut in Fig. 4 anhand der im dortigen oberen Bereich dargestellten Schnittkanalabschnitte 18 erkennbar. Mit den nur zwei geometrisch unterschiedlich ausgebildeten Zähnen 11 und 12 werden fünf Schnittkanalabschnitte 18 ausgebildet. Diese Zahngeometrie und -anordnung kann auch als "quintuple chip"-Geometrie bezeichnet werden. Sie wird dadurch erreicht, dass der zweite Zahn 12 als Spanteilerzahn ausgebildet ist.

Dies bedeutet u. a., dass der Zahn 12 einen Teil der Schneidkante 6 des ersten Zahns 11 so verdeckt, dass dieser jeweils im Bereich seiner Fase 15 zwei wirksame Schneidkantenabschnitte 7 aufweist, zwischen denen ein unwirksamer Schneidkantenabschnitt 8 des ersten Zahns 11 gebildet ist. Der zwischengeordnete unwirksame Schneidkantenabschnitt 8 ist der Bereich, der durch den zweiten Zahn 12 überdeckt wird. Die Zwischenanordnung des unwirksamen Schneidkantenabschnitts 8 ergibt sich also dadurch, dass die Überlappung von der Längsmittelebene nach außen gesehen vor dem äußersten Punkt der Schneidkante 6 des ersten Zahns 11 endet.

Wie in Fig. 4 gut erkennbar ist, befindet sich dadurch in den äußeren Bereichen der beiden zweitäußersten Schnittkanalabschnitte 18 keine scharfe Kante im Sinne eines Übergangs zwischen einem geraden Abschnitt 16 und einer Fase 15 des zweiten Zahns 12. Stattdessen ist dort nur ein durchgehender gerade Abschnitt 16 vorhanden. Hierdurch ist die Oberflächenqualität in diesem Schnittkanalabschnitt 18 verbessert.

Bei dem vorliegenden Beispiel gemäß Fig. 3 und 4 ist der erste Zahn 11 dabei so ausgebildet, dass er eine größere maximale Höhe und eine größere maximale Breite als der zweite Zahn 12 besitzt. Der erste Zahn 11 ist somit als kombinierter Leistungs- und Oberflächenzahn ausgebildet. Der zweite Zahn 12 ist ein reiner Leistungszahn und ist nicht an der Bildung der seitlichen Oberfläche im Schnittkanal beteiligt. Der zweite Zahn 12 ist so ausgebildet und angeordnet, dass seine Flanke 17 die Fase 7 des ersten Zahns 11 schneidet und die Flanke 17 des ersten Zahns 11 nicht berührt bzw. überdeckt.

Aufgrund des positiven Flankenwinkels ergibt sich ein Hinterschnitt bzw. Freischnitt oder Freiwinkel. Dieser führt dazu, dass weniger Reibung entsteht und die nebeneinander erzeugten Späne besser voneinander getrennt sind. Hierdurch entstehen geringere Schwingungen und dementsprechend eine reduzierte Lärmemission beim Sägen. Es könnte aber auch ein negativer Flankenwinkel oder ein Flankenwinkel von 0° gewählt werden. In diesen Fällen liegt dann kein Hinterschnitt vor.

Die Breite der einzelnen Schnittkanalabschnitte 18 entspricht dabei der Breite des jeweiligen beim Sägen abgenommenen Spans. Im vorliegenden Fall entstehen also fünf separate Späne mit unterschiedlichen Breiten. Die Späne könnten aber auch insgesamt oder teilweise übereinstimmende Breiten besitzen.

Ein Sägeband 1 des Stands der Technik ist in **Fig. 5** gezeigt. Es handelt sich dabei um ein Sägeband 1 gemäß der Vor- und Nachschneidertechnik. An dem Sägeband 1 befinden sich abwechselnd genau zwei geometrisch unterschiedliche Zähne 10, nämlich der erste Zahn 11 und der zweite Zahn 12. Bei dem ersten Zahn 11 handelt es sich um den sogenannten Vorschneider. Der zweite Zahn 12 ist der sogenannte Nachschneider. Der erste Zahn 11 ist höher als der zweite Zahn 12 und gefast ausgebildet. Der zweite Zahn 12 ist ungefast ausgebildet. Die Flanken 17 des zweiten Zahns 12 schneiden dabei die Flanken 17 des ersten Zahns 11. In dieser Weise werden mit den zwei unterschiedlichen Zähnen 10 drei Schnittkanalabschnitte 18 gebildet.

Ein weiteres Sägeband 1 des Stands der Technik ist in **Fig. 6** dargestellt. Bei diesem Sägeband 1 handelt es sich um ein Sägeband 1 gemäß der Gruppentechnik und zwar genauer gesagt gemäß der Marke "FUTURA" der Anmelderin. Die sich wiederholende Zahngruppe weist dabei den ersten Zahn 11, den zweiten Zahn 12, einen dritten Zahn 13 und einen vierten Zahn 14 auf. Sämtliche Zähne 10 sind gefast ausgebildet und so ausgebildet und angeordnet, dass sich ihre Flanken 17 überdecken. Die Zähne 10 sind dabei so in einer Höhen- und Breitenstufung ausgebildet und angeordnet, dass mit den vier Zähnen 10 sieben Schnittkanalabschnitte 18 gebildet werden.

Im Vergleich zum Stand der Technik gemäß Fig. 5 und 6 werden mit dem Sägeband 1 mit mindestens einem Spanteilerzahn mit einer vergleichsweise geringen Anzahl geometrisch unterschiedlich ausgebildeter Zähne 10 eine vergleichsweise große Anzahl separater Schnittkanalabschnitte 18 gebildet.

In den **Fig. 7 bis 24** sind verschiedene weitere beispielhafte Ausführungsformen des Sägebands 1 gezeigt, wobei die in den Fig. 7 bis 9 und 11 bis 24 gezeigten Ausführungsformen nicht von den Gegenständen der Patentansprüche umfasst sind. Mit Ausnahme der spezifischen Geometrie der Zähne 10 entspricht der Aufbau des Sägebands 1 im Wesentlichen dem der ersten Ausführungsform des Sägebands 1, so dass bezüglich der Seitenansicht und der Draufsicht auf die Fig. 1 und 2 verwiesen wird. Die Zahngruppe wird dann entlang der Länge des Sägebands 1 mit einer konstanten Teilung wiederholt. Es könnte aber auch eine variable Teilung Anwendung finden.

Fig. 7 zeigt eine Fig. 4 entsprechende Ansicht einer zweiten beispielhaften Ausführungsform des Sägebands 1. Das Sägeband 1 weist zwei geometrisch unterschiedlich ausgebildete Zähne 10 in der Gruppe auf. Der erste Zahn 11 ist genauso wie bei dem ersten Ausführungsbeispiel des Sägebands 1 ausgebildet. Der erste Zahn 11 ist als kombinierter Leistungs- und Oberflächenzahn und als positiv konischer Zahn ausgebildet. Der zweite Zahn 12 weist im Unterschied zu dem ersten Ausführungsbeispiel des Sägebands 1 keinen Flankenwinkel von etwa 6°, sondern von etwa 3° auf. In dieser Weise werden mit zwei geometrisch unterschiedlich ausgebildeten Zähnen 10 fünf Schnittkanalabschnitte 18 erzeugt.

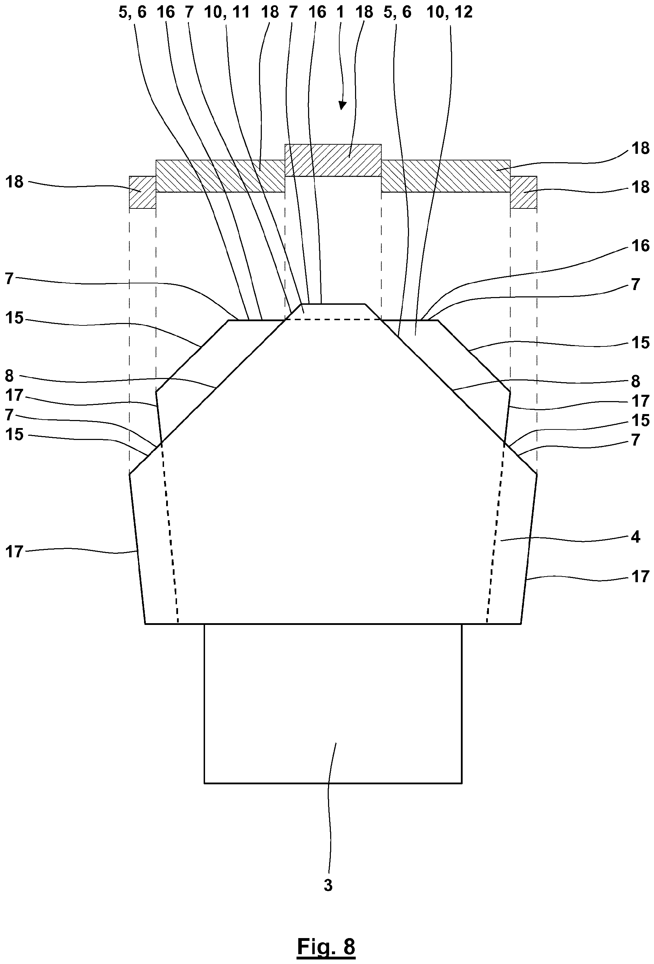

**Fig. 8** zeigt eine Fig. 4 entsprechende Ansicht einer weiteren beispielhaften Ausführungsform des Sägebands 1. Das Sägeband 1 weist zwei geometrisch unterschiedlich ausgebildete Zähne 10 in der Gruppe auf. Der erste Zahn 11 ist genauso wie bei dem ersten Ausführungsbeispiel des Sägebands 1 ausgebildet. Der erste Zahn 11 ist als kombinierter Leistungs- und Oberflächenzahn und als positiv konischer Zahn ausgebildet. Der zweite Zahn 12 weist im Unterschied zu dem ersten Ausführungsbeispiel des Sägebands 1 Fasen 15 auf. In dieser Weise werden mit zwei geometrisch unterschiedlich ausgebildeten Zähnen 10 fünf Schnittkanalabschnitte 18 erzeugt.

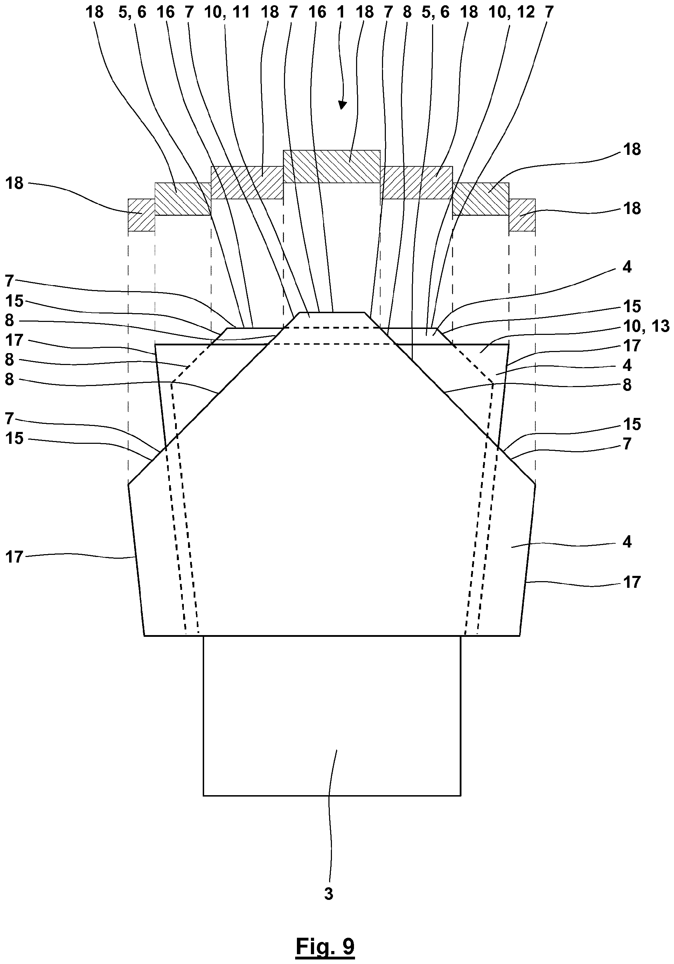

**Fig. 9** zeigt eine Fig. 4 entsprechende Ansicht einer weiteren beispielhaften Ausführungsform des Sägebands 1. Das Sägeband 1 weist drei geometrisch unterschiedlich ausgebildete Zähne 10 in der Gruppe auf. Der erste Zahn 11 ist wiederum so wie bei der ersten Ausführungsform des Sägebands 1 ausgebildet. Der erste Zahn 11 ist als kombinierter Leistungs- und Oberflächenzahn und als positiv konischer Zahn ausgebildet. Der zweite Zahn 12 weist wiederum einen Flankenwinkel von etwa 6°, aber eine etwas geringere Höhe als bei der ersten Ausführungsform des Sägebands 1 auf. Hierdurch wurde Platz für den dritten Zahn 13 geschaffen. In diesem Fall ist dieser gefast ausgebildet und stellt den zweithöchsten Zahn 10 in der Zahngruppe dar. Der dritte Zahn 13 ist als Leistungszahn und als positiv konischer Zahn ausgebildet. Die Zähne 12 und 13 bilden funktional gemeinsam einen Spanteilerzahn. In dieser Weise werden mit drei geometrisch unterschiedlich ausgebildeten Zähnen 10 sieben Schnittkanalabschnitte 18 erzeugt. Dies ist die gleiche Anzahl von Schnittkanalabschnitten 18, wie sie im Stand der Technik gemäß Fig. 6 mit vier geometrisch unterschiedlichen Zähnen 10 erzielt wird.

**Fig. 10** zeigt eine Fig. 4 entsprechende Ansicht einer weiteren beispielhaften Ausführungsform des neuen Sägebands 1, die von den Gegenständen der Patentansprüche umfasst ist. Das Sägeband 1 weist drei geometrisch unterschiedlich ausgebildete Zähne 10 in der Gruppe auf. Der erste Zahn 11 ist wiederum so wie bei der ersten Ausführungsform des Sägebands 1 ausgebildet. Der erste Zahn 11 ist als kombinierter Leistungs- und Oberflächenzahn und als positiv konischer Zahn ausgebildet. Alle drei Zähne 11, 12 und 13 weisen einen Flankenwinkel von etwa 6° auf. Der erste Zahn 11 und der zweite Zahn 12 sind gefast ausgebildet. Der dritte Zahn 13 ist ungefast ausgebildet. Die Zähne 10 sind so ausgebildet und angeordnet, dass zwei Spanteilerzähne vorhanden sind, nämlich der zweite Zahn 12 und der dritte Zahn 13. Der zweite Zahn 12 ist ein Spanteilerzahn für den ersten Zahn 11. Der dritte Zahn 13 ist ein Spanteilerzahn für den zweiten Zahn 12. Gleichzeitig sind die Zähne 12 und 13 jeweils als Leistungszahn und positiv konischer Zahn ausgebildet. In dieser Weise werden mit drei geometrisch unterschiedlich ausgebildeten Zähnen 10 neun Schnittkanalabschnitte 18 erzeugt. Dies ist eine höhere Anzahl von Schnittkanalabschnitten 18, als sie im Stand der Technik gemäß Fig. 6 mit vier geometrisch unterschiedlichen Zähnen 10 erzielt wird.

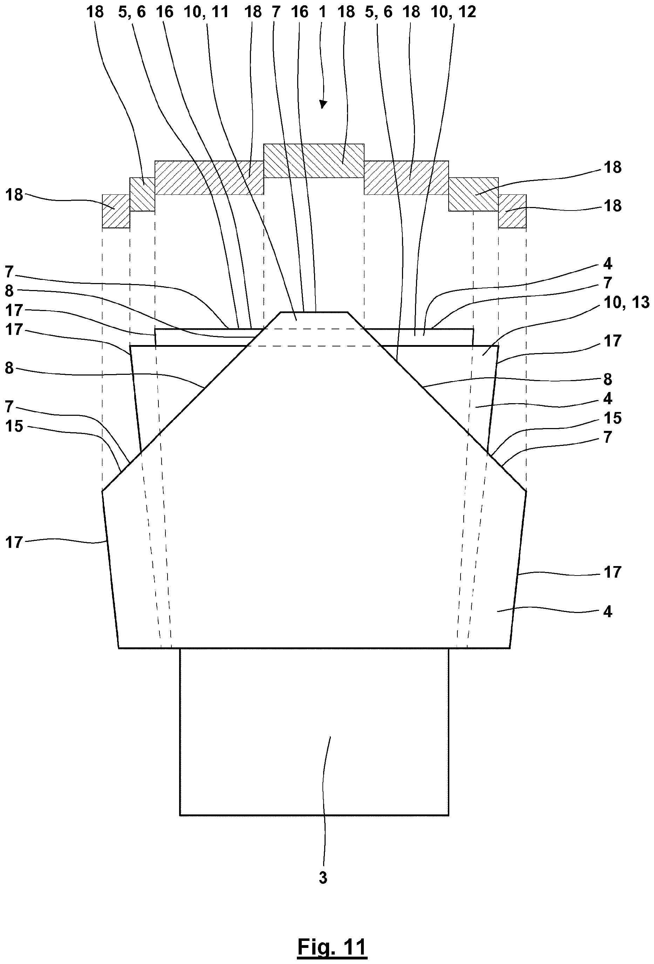

**Fig. 11** zeigt eine Fig. 4 entsprechende Ansicht einer weiteren beispielhaften Ausführungsform des Sägebands 1. Das Sägeband 1 weist drei geometrisch unterschiedlich ausgebildete Zähne 10 in der Gruppe auf. Der erste Zahn 11 ist wiederum so wie bei der ersten Ausführungsform des Sägebands 1 ausgebildet. Der erste Zahn 11 ist als kombinierter Leistungs- und Oberflächenzahn und als positiv konischer Zahn ausgebildet. Die Zähne 11 und 13 weisen einen Flankenwinkel von etwa 6° auf. Der zweite Zahn 12 weist einen Flankenwinkel von etwa 3,5° auf. Der zweite Zahn 12 und der dritte Zahn 13 sind ungefast ausgebildet. Die Zähne 12 und 13 sind jeweils als Leistungszahn und als positiv konischer Zahn ausgebildet. Die Zähne 12 und 13 bilden funktional gemeinsam einen Spanteilerzahn. In dieser Weise werden mit drei geometrisch unterschiedlich ausgebildeten Zähnen 10 sieben Schnittkanalabschnitte 18 erzeugt. Dies ist die gleiche Anzahl von Schnittkanalabschnitten 18, wie sie im Stand der Technik gemäß Fig. 6 mit vier geometrisch unterschiedlichen Zähnen 10 erzielt wird.

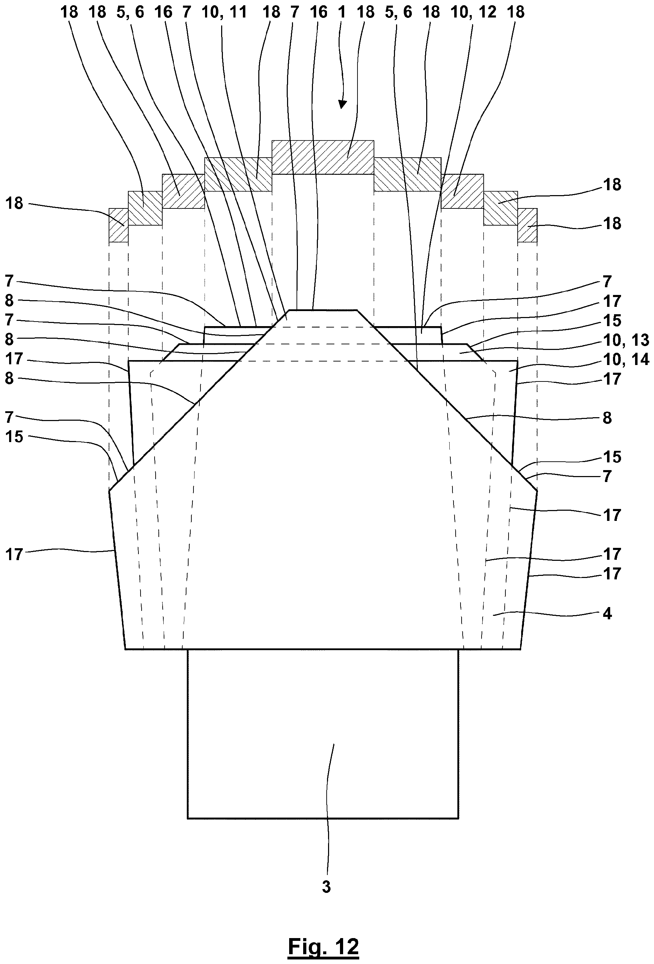

**Fig. 12** zeigt eine Fig. 4 entsprechende Ansicht einer weiteren beispielhaften Ausführungsform des Sägebands 1. Das Sägeband 1 weist vier geometrisch unterschiedlich ausgebildete Zähne 10 in der Gruppe auf. Der erste Zahn 11 ist wiederum so wie bei der ersten Ausführungsform des Sägebands 1 ausgebildet. Der erste Zahn 11 ist als kombinierter Leistungs- und Oberflächenzahn und als positiv konischer Zahn ausgebildet. Der erste Zahn 11 weist einen Flankenwinkel von etwa 6° auf. Der zweite Zahn 12 weist einen Flankenwinkel von etwa -4° auf. Die Zähne 13 und 14 weisen jeweils einen Flankenwinkel von etwa 3° auf. Der erste Zahn 11 und der dritte Zahn 13 sind gefast ausgebildet und weisen einen Fasenwinkel von etwa 45° auf. Der zweite Zahn 12 und der vierte Zahn 14 sind ungefast. Die Zähne 13 und 14 sind jeweils als Leistungszahn und als positiv konischer Zahn ausgebildet. Der Zahn 12 ist als Leistungszahn und als negativ konischer Zahn ausgebildet. Die Zähne 12, 13 und 14 bilden funktional gemeinsam einen Spanteilerzahn. In dieser Weise werden mit vier geometrisch unterschiedlich ausgebildeten Zähnen 10 neun Schnittkanalabschnitte 18 erzeugt. Dies ist eine höhere Anzahl von Schnittkanalabschnitten 18, als sie im Stand der Technik gemäß Fig. 6 mit vier geometrisch unterschiedlichen Zähnen 10 erzielt wird.

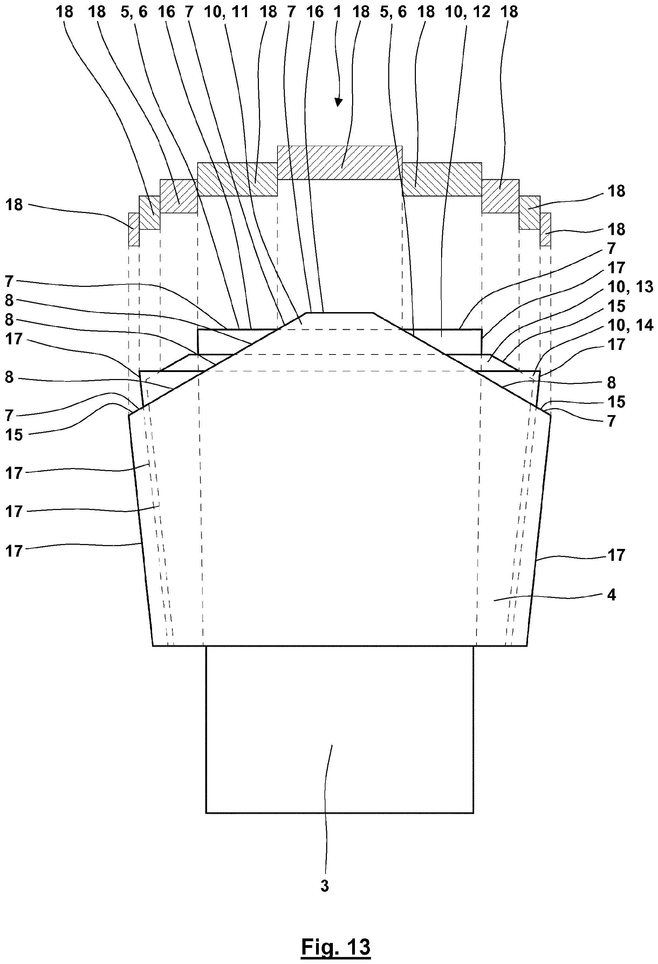

**Fig. 13** zeigt eine Fig. 4 entsprechende Ansicht einer weiteren beispielhaften Ausführungsform des Sägebands 1. Das Sägeband 1 weist vier geometrisch unterschiedlich ausgebildete Zähne 10 in der Gruppe auf. Der erste Zahn 11 ist ähnlich wie bei der ersten Ausführungsform des Sägebands 1 ausgebildet, weist aber einen Fasenwinkel von etwa 30° auf. Die Zähne 11, 13 und 14 weisen jeweils einen Flankenwinkel von etwa 6° auf. Der zweite Zahn 12 weist einen Flankenwinkel von etwa 0° auf. Der erste Zahn 11 und der dritte Zahn 13 sind gefast ausgebildet und weisen einen Fasenwinkel von etwa 30° auf. Der zweite Zahn 12 und der vierte Zahn 14 sind ungefast. Die Zähne 13 und 14 sind jeweils als Leistungszahn und als positiv konischer Zahn ausgebildet. Der Zahn 12 ist als Leistungszahn und als gerader (nicht konischer) Zahn ausgebildet. Die Zähne 12, 13 und 14 bilden funktional gemeinsam einen Spanteilerzahn. In dieser Weise werden mit vier geometrisch unterschiedlich ausgebildeten Zähnen 10 neun Schnittkanalabschnitte 18 erzeugt.

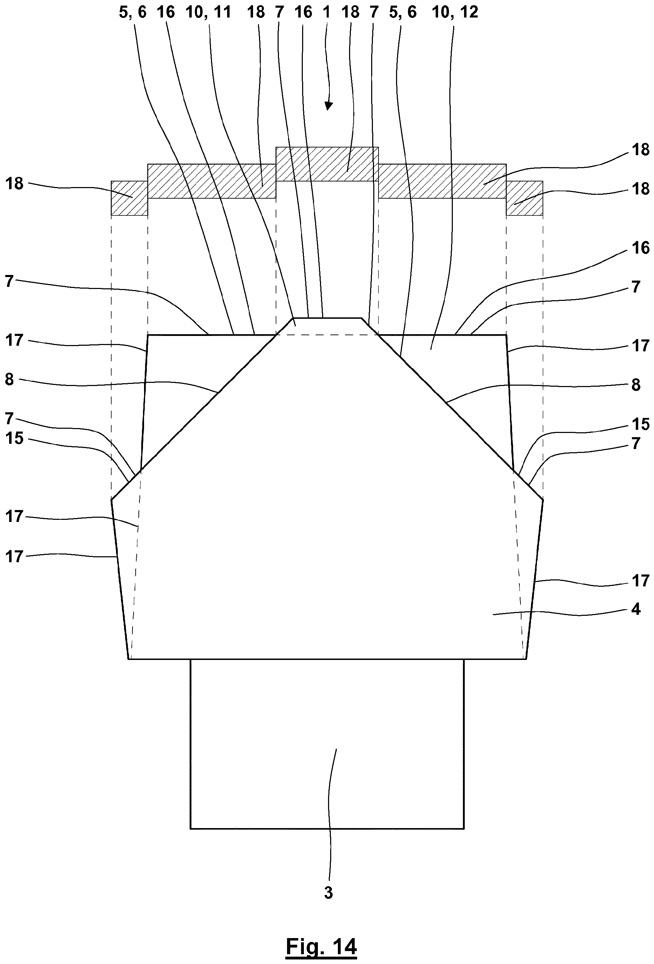

**Fig. 14** zeigt eine Fig. 4 entsprechende Ansicht einer weiteren beispielhaften Ausführungsform des Sägebands 1. Das Sägeband 1 weist zwei geometrisch unterschiedlich ausgebildete Zähne 10 in der Gruppe auf. Der erste Zahn 11 ist genauso wie bei dem ersten Ausführungsbeispiel des Sägebands 1 ausgebildet. Der erste Zahn 11 ist als kombinierter Leistungs- und Oberflächenzahn und als positiv konischer Zahn ausgebildet. Der zweite Zahn 12 ist ungefast ausgebildet und weist einen negativen Flankenwinkel auf. In diesem Fall beträgt der Flankenwinkel etwa -3,5°. Der zweite Zahn 12 ist als Leistungszahn, negativ konischer Zahn und Spanteilerzahn ausgebildet. In dieser Weise werden mit zwei geometrisch unterschiedlich ausgebildeten Zähnen 10 fünf Schnittkanalabschnitte 18 erzeugt.

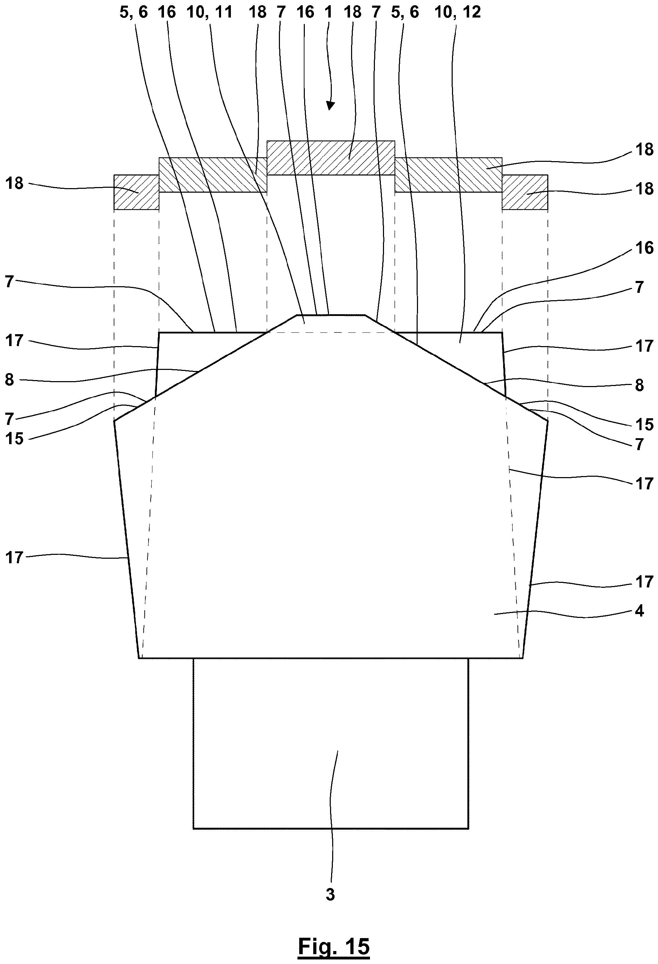

**Fig. 15** zeigt eine Fig. 4 entsprechende Ansicht einer weiteren beispielhaften Ausführungsform des Sägebands 1. Das Sägeband 1 weist zwei geometrisch unterschiedlich ausgebildete Zähne 10 in der Gruppe auf. Der erste Zahn 11 ist ähnlich wie bei dem ersten Ausführungsbeispiel des Sägebands 1 ausgebildet, weist aber einen Fasenwinkel von etwa 30° auf. Der erste Zahn 11 ist als kombinierter Leistungs- und Oberflächenzahn und als positiv konischer Zahn ausgebildet. Der zweite Zahn 12 weist einen negativen Flankenwinkel auf. Im vorliegenden Fall beträgt dieser etwa -3°. Der zweite Zahn 12 ist als Leistungszahn, negativ konischer Zahn und Spanteilerzahn ausgebildet. In dieser Weise werden mit zwei geometrisch unterschiedlich ausgebildeten Zähnen 10 fünf Schnittkanalabschnitte 18 erzeugt.

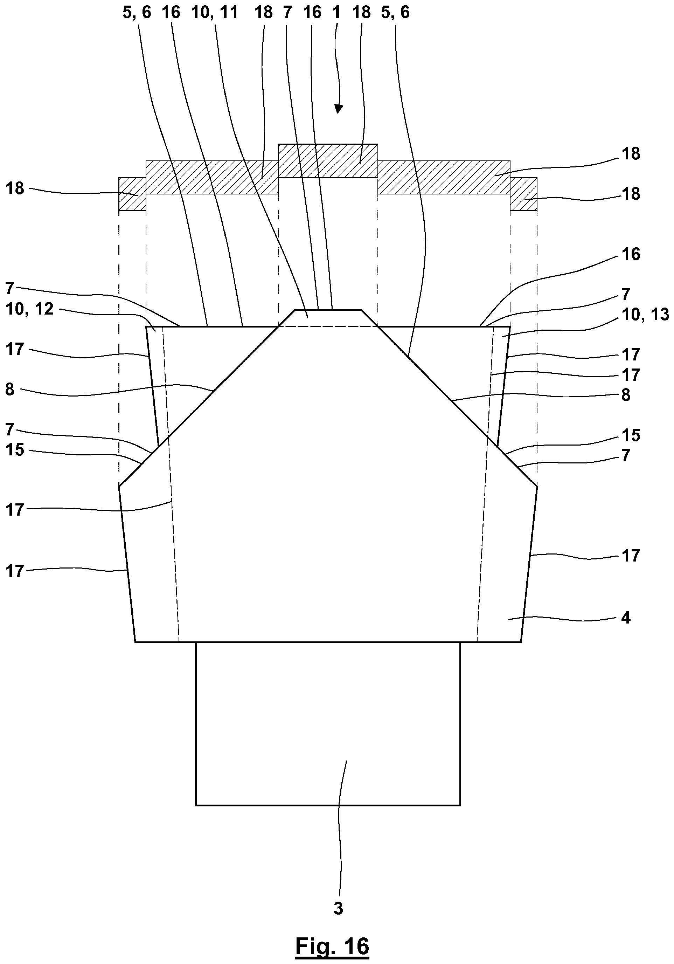

**Fig. 16** zeigt eine Fig. 4 entsprechende Ansicht einer weiteren beispielhaften Ausführungsform des Sägebands 1. Das Sägeband 1 weist drei geometrisch unterschiedlich ausgebildete Zähne 10 in der Gruppe auf. Der erste Zahn 11 ist wiederum so wie bei der ersten Ausführungsform des Sägebands 1 ausgebildet. Der erste Zahn 11 ist als kombinierter Leistungs- und Oberflächenzahn und als positiv konischer Zahn ausgebildet. Der zweite Zahn 12 und der dritte Zahn 13 sind gleich hoch. Sie sind asymmetrisch ausgebildet. Der zweite Zahn 12 erstreckt sich dabei weiter nach links von der Längsmittelebene. Der dritte Zahn 13 erstreckt sich weiter nach rechts von der Längsmittelebene. Demnach wird die rechte Flanke 17 des zweiten Zahns 12 von dem dritten Zahn 13 überdeckt. Die linke Flanke 17 des dritten Zahns 13 wird von dem zweiten Zahn 12 überdeckt. Die Zähne 12, 13 sind also funktionsmäßig ähnlich wie geschränkte Zähne ausgebildet, wobei die Asymmetrie nicht durch ein nachträgliches Schränken, sondern eine entsprechende Ausbildung der Einsätze 4 erreicht wurde. Die Zähne 12 und 13 sind jeweils als Leistungszahn und als positiv konischer Zahn mit einem Flankenwinkel von etwa 3° ausgebildet. Die Zähne 12 und 13 bilden funktional gemeinsam einen Spanteilerzahn. In dieser Weise werden mit drei geometrisch unterschiedlich ausgebildeten Zähnen 10 fünf Schnittkanalabschnitte 18 erzeugt.

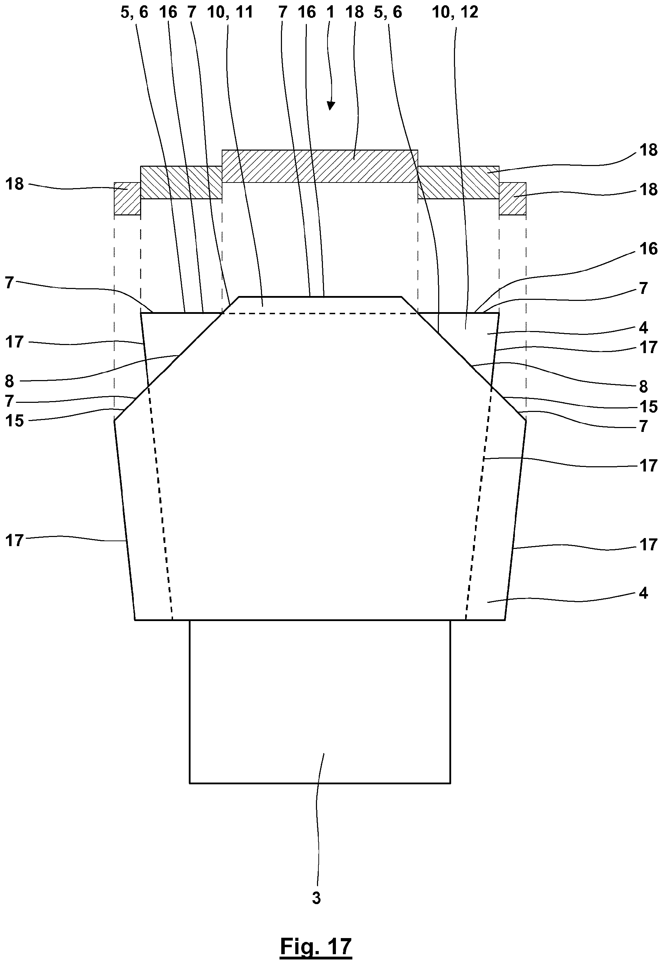

**Fig. 17** zeigt eine Fig. 4 entsprechende Ansicht einer weiteren beispielhaften Ausführungsform des Sägebands 1. Das Sägeband 1 weist zwei geometrisch unterschiedlich ausgebildete Zähne 10 in der Gruppe auf. Der erste Zahn 11 ist wiederum ähnlich wie bei der ersten Ausführungsform des Sägebands 1 ausgebildet, weist aber einen längeren geraden Abschnitt 16 auf. Der erste Zahn 11 ist als kombinierter Leistungs- und Oberflächenzahn und als positiv konischer Zahn ausgebildet. Der zweite Zahn 12 ist ungefast ausgebildet. Beide Zähne 11, 12 weisen einen Flankenwinkel von etwa 6° auf. Der zweite Zahn 12 ist als Leistungszahn, positiv konischer Zahn und Spanteilerzahn ausgebildet. In dieser Weise werden mit zwei geometrisch unterschiedlich ausgebildeten Zähnen 10 fünf Schnittkanalabschnitte 18 erzeugt.

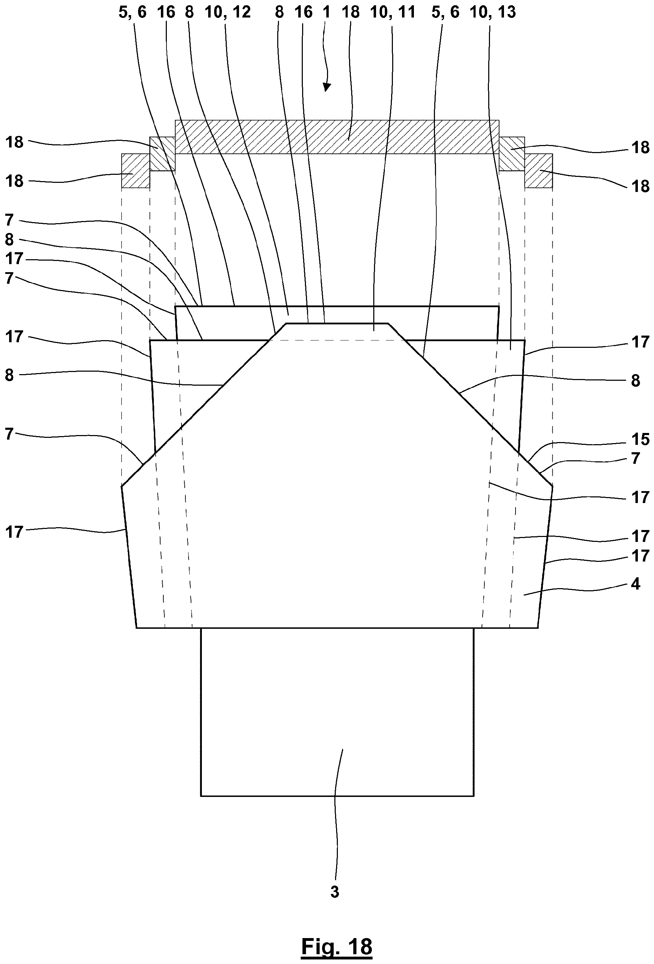

**Fig. 18** zeigt eine Fig. 4 entsprechende Ansicht einer weiteren beispielhaften Ausführungsform des Sägebands 1. Das Sägeband 1 weist drei geometrisch unterschiedlich ausgebildete Zähne 10 in der Gruppe auf. Der erste Zahn 11 ist hier anders als bei der ersten Ausführungsform des Sägebands 1 ausgebildet. Er ist nämlich nicht der höchste Zahn 10 in der Gruppe. Der erste Zahn 11 ist somit als reiner Oberflächenzahn ausgebildet. Er ist weiterhin als positiv konischer Zahn mit einem Flankenwinkel von etwa 6° ausgebildet. Der zweite Zahn 12 und der dritte Zahn 13 sind jeweils ungefast ausgebildet und weisen einen Flankenwinkel von etwa 3° auf. Die Zähne 12 und 13 sind als reine Leistungszähne ausgebildet. Der Zahn 12 ist dabei der höchste Zahn 10 in der Gruppe. Der dritte Zahn 13 ist als Spanteilerzahn ausgebildet. In dieser Weise werden mit drei geometrisch unterschiedlich ausgebildeten Zähnen 10 fünf Schnittkanalabschnitte 18 erzeugt.

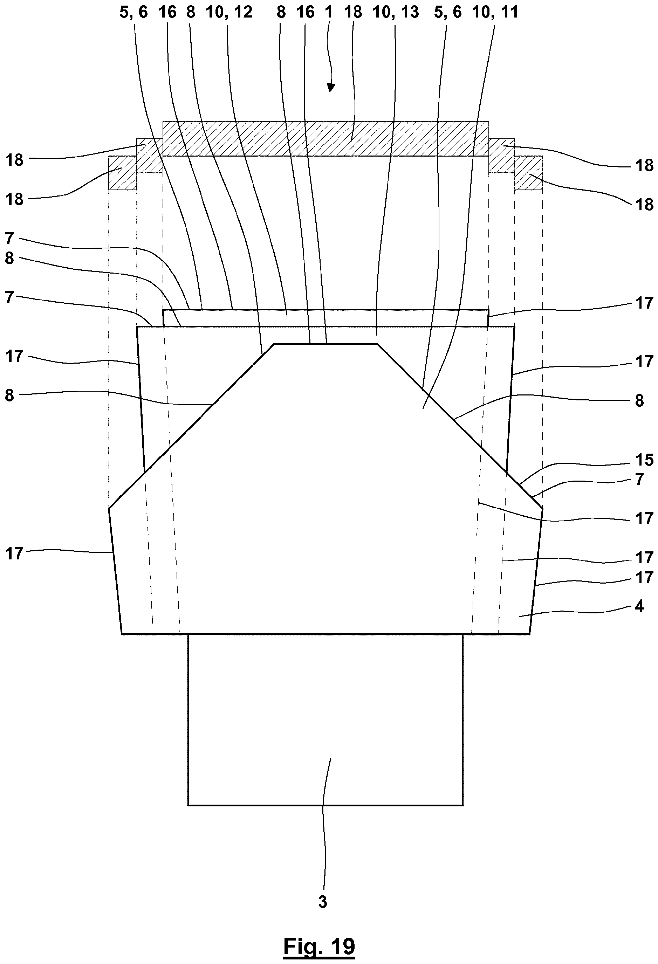

**Fig. 19** zeigt eine weitere beispielhafte Ausführungsform des Sägebands 1, die ähnlich der in Fig. 18 dargestellten Ausführungsform ist. In diesem Fall ist der erste Zahn 11 sogar als niedrigster Zahn 10 in der Gruppe ausgebildet. Der dritte Zahn 13 ist als Spanteilerzahn ausgebildet. In dieser Weise werden mit drei geometrisch unterschiedlich ausgebildeten Zähnen 10 fünf Schnittkanalabschnitte 18 erzeugt.

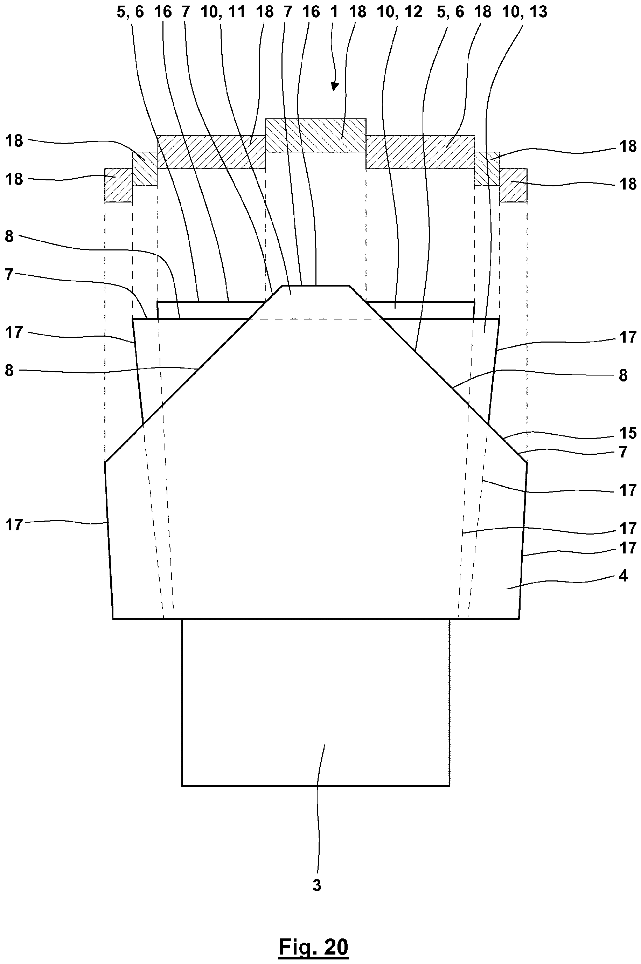

**Fig. 20** zeigt eine Fig. 4 entsprechende Ansicht einer weiteren beispielhaften Ausführungsform des Sägebands 1. Das Sägeband 1 weist drei geometrisch unterschiedlich ausgebildete Zähne 10 in der Gruppe auf. Der erste Zahn 11 ist ähnlich wie bei dem ersten Ausführungsbeispiel des Sägebands 1 ausgebildet, weist aber einen Flankenwinkel von etwa 3° auf. Der erste Zahn 11 ist als kombinierter Leistungs- und Oberflächenzahn und als positiv konischer Zahn ausgebildet. Der zweite Zahn 12 und der dritte Zahn 13 sind jeweils ungefast, als Leistungszähne und als positiv konische Zähne ausgebildet. Der zweite Zahn 12 weist einen Flankenwinkel von etwa 3° auf. Der dritte Zahn 13 weist einen Flankenwinkel von etwa 6° auf. Beide Zähne 12, 13 sind als Spanteilerzähne ausgebildet. Die Zähne 12 und 13 bilden funktional gemeinsam einen Spanteilerzahn. In dieser Weise werden mit drei geometrisch unterschiedlich ausgebildeten Zähnen 10 sieben Schnittkanalabschnitte 18 erzeugt.

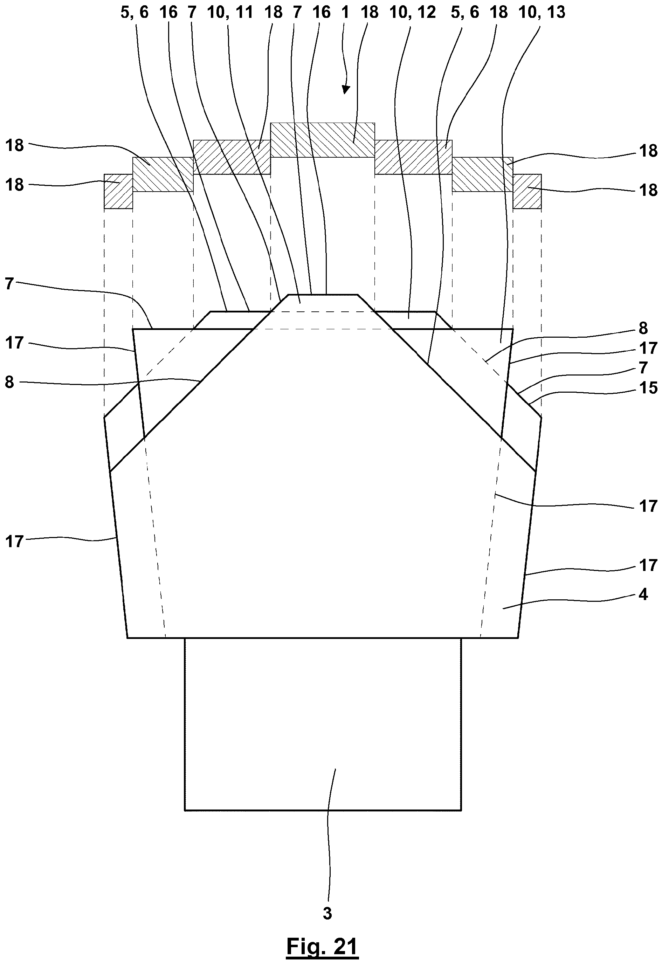

**Fig. 21** zeigt eine Fig. 4 entsprechende Ansicht einer weiteren beispielhaften Ausführungsform des Sägebands 1. Diese Ausführungsform weist einige Gemeinsamkeiten mit der in Fig. 10 dargestellten Ausführungsform auf. Im Unterschied dazu ist hier der erste Zahn 11 nur als Leistungszahn, nicht aber als Oberflächenzahn ausgebildet. Diese Funktion wird durch den zweiten Zahn 12 übernommen. Die Flanke 17 des zweiten Zahns 12 schneidet dabei die Flanke 17 des ersten Zahns 11 und fällt weiter in Richtung des Zahntragekörpers 2 gesehen (in dieser Ansicht) mit dieser zusammen. Dadurch handelt es sich also bei dem zweiten Zahn 12 um keinen Spanteilerzahn. Der einzige Spanteilerzahn in der Gruppe ist der Zahn 13. In dieser Weise werden mit drei geometrisch unterschiedlich ausgebildeten Zähnen 10 fünf Schnittkanalabschnitte 18 erzeugt.

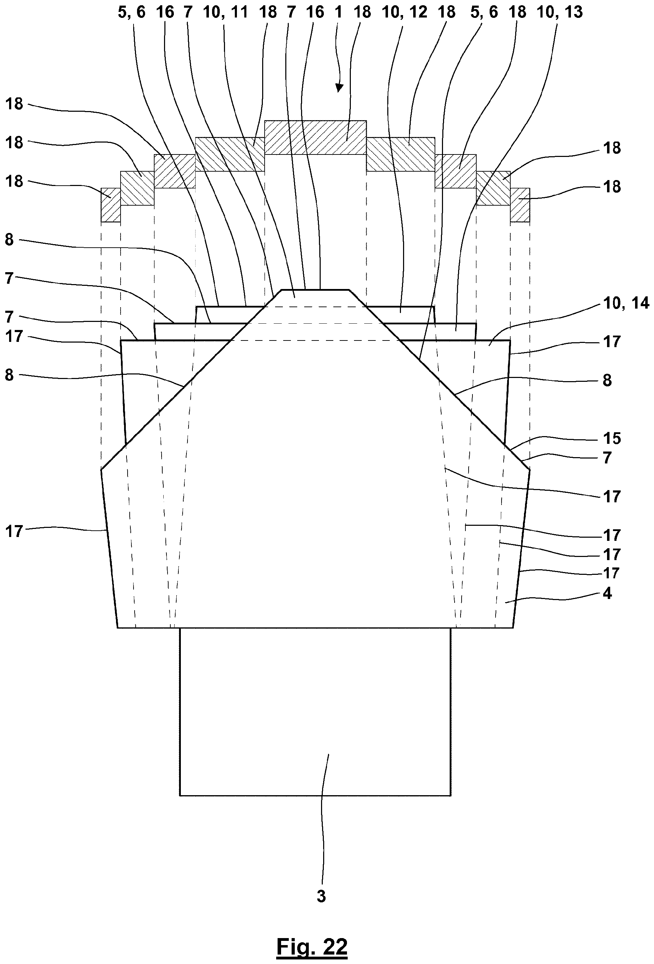

**Fig. 22** zeigt eine Fig. 4 entsprechende Ansicht einer weiteren beispielhaften Ausführungsform des Sägebands 1. Das Sägeband 1 weist vier geometrisch unterschiedlich ausgebildete Zähne 10 in der Gruppe auf. Der erste Zahn 11 ist wiederum ähnlich wie bei der ersten Ausführungsform des Sägebands 1 ausgebildet. Der erste Zahn 11 ist als kombinierter Leistungs- und Oberflächenzahn und als positiv konischer Zahn ausgebildet. Er ist der einzige gefaste Zahn 10 in der Gruppe. Die weiteren Zähne 12, 13 und 14 sind demnach als ungefaste Zähne 10 ausgebildet. Der zweite Zahn 12 weist einen Flankenwinkel von etwa -4° auf und ist somit als negativ konischer Zahn ausgebildet. Der dritte Zahn 13 weist einen Flankenwinkel von etwa 6° auf und ist somit als positiv konischer Zahn ausgebildet. Der vierte Zahn 14 weist einen Flankenwinkel von etwa 3° auf und ist somit ebenfalls als positiv konischer Zahn ausgebildet. Die Zähne 12, 13 und 14 bilden funktional gemeinsam einen Spanteilerzahn. In dieser Weise werden mit vier geometrisch unterschiedlich ausgebildeten Zähnen 10 neun Schnittkanalabschnitte 18 erzeugt.

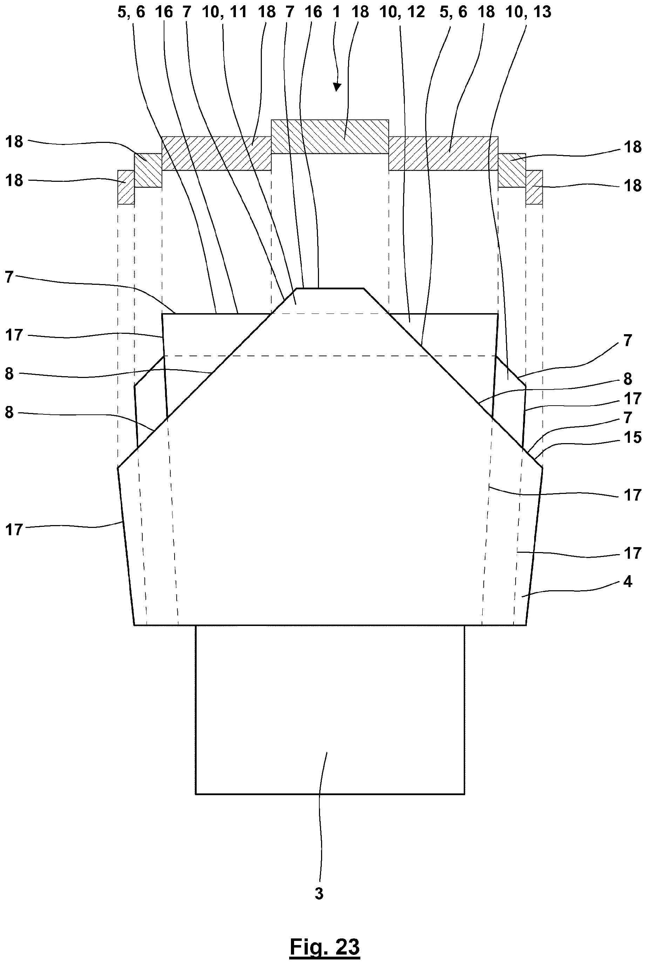

**Fig. 23** zeigt eine Fig. 4 entsprechende Ansicht einer weiteren beispielhaften Ausführungsform des Sägebands 1. Das Sägeband 1 weist drei geometrisch unterschiedlich ausgebildete Zähne 10 in der Gruppe auf. Der erste Zahn 11 ist genauso wie bei dem ersten Ausführungsbeispiel des Sägebands 1 ausgebildet. Der erste Zahn 11 ist als kombinierter Leistungs- und Oberflächenzahn und als positiv konischer Zahn ausgebildet. Der zweite Zahn 12 ist ungefast ausgebildet und weist einen positiven Flankenwinkel von etwa 3° auf. Der dritte Zahn 13 ist gefast ausgebildet und weist ebenfalls einen positiven Flankenwinkel von etwa 3° auf. Die Zähne 12 und 13 bilden funktional gemeinsam einen Spanteilerzahn. In dieser Weise werden mit drei geometrisch unterschiedlich ausgebildeten Zähnen 10 sieben Schnittkanalabschnitte 18 erzeugt.

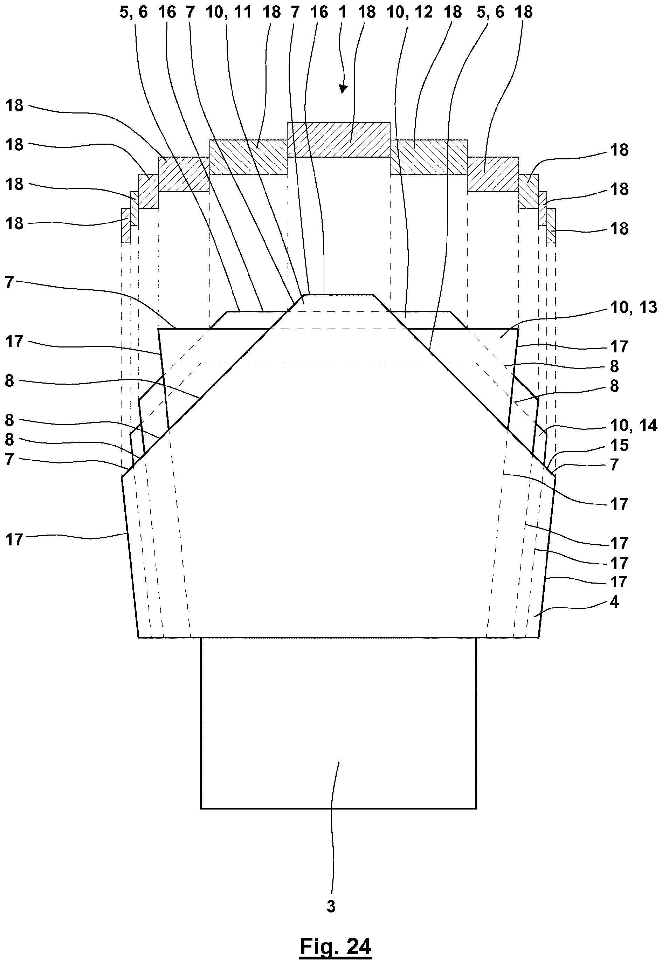

**Fig. 24** zeigt eine Fig. 4 entsprechende Ansicht einer weiteren beispielhaften Ausführungsform des Sägebands 1. Das Sägeband 1 weist vier geometrisch unterschiedlich ausgebildete Zähne 10 in der Gruppe auf. Der erste Zahn 11 ist ähnlich wie bei dem ersten Ausführungsbeispiel des Sägebands 1 ausgebildet, weist aber einen Flankenwinkel von etwa 3° auf. Der erste Zahn 11 ist als kombinierter Leistungs- und Oberflächenzahn und als positiv konischer Zahn ausgebildet. Der zweite Zahn 12 und der vierte Zahn 14 sind jeweils gefast ausgebildet. Der dritte Zahn 13 ist ungefast ausgebildet. Die Zähne 12, 13 und 14 weisen jeweils einen Flankenwinkel von etwa 3° auf. Der dritte Zahn 13 ist als Spanteilerzahn in Bezug auf den zweiten Zahn 12 ausgebildet. Die Zähne 12 und 14 bilden funktional gemeinsam einen Spanteilerzahn in Bezug auf den ersten Zahn 11. Somit liegen insgesamt funktional zwei Spanteilerzähne vor. In dieser Weise werden mit vier geometrisch unterschiedlich ausgebildeten Zähnen 10 elf Schnittkanalabschnitte 18 erzeugt.

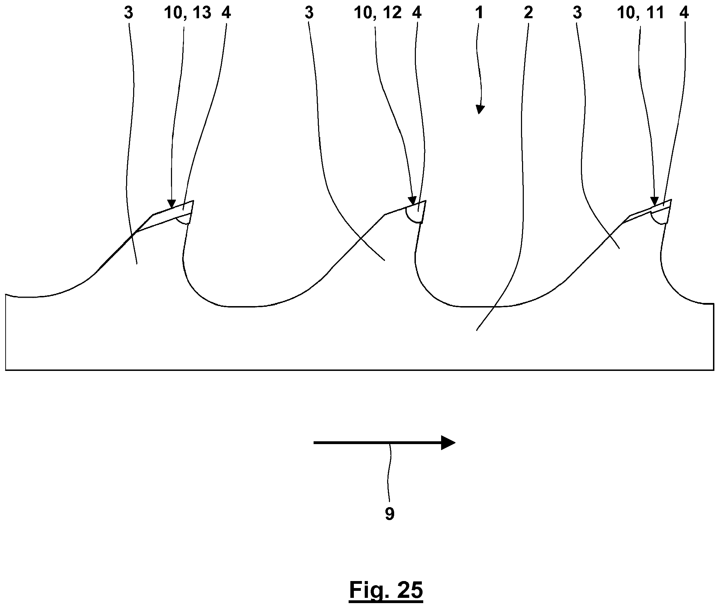

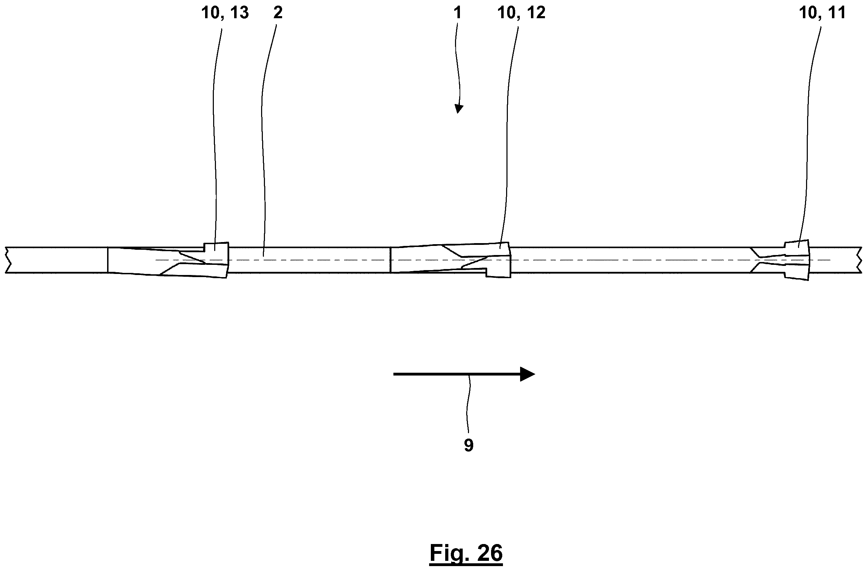

**Fig. 25-27** zeigen den Fig. 1, 2 und 4 entsprechende Ansichten einer weiteren beispielhaften Ausführungsform des Sägebands 1. Das Sägeband 1 weist drei geometrisch unterschiedlich ausgebildete Zähne 10 in der Gruppe auf. Der erste Zahn 11 weist einen Fasenwinkel von 30° auf. Der erste Zahn 11 ist als kombinierter Leistungs- und Oberflächenzahn und als positiv konischer Zahn ausgebildet. Der erste Zahn 11 weist einen Flankenwinkel von etwa 6° auf. Die Zähne 12 und 13 sind als geschränkte Zähne 10 ausgebildet. In diesem Fall ist der Zahn 12 der Zahn 10, der in der Bandlaufrichtung 9 gesehen an der linken Seite des Sägebands 1 arbeitet. Dementsprechend ist der Zahn 13 der Zahn 10, der in der Bandlaufrichtung 9 gesehen an der rechten Seite des Sägebands 1 arbeitet. Die Zähne 12, 13 sind in Ihrem wirksamen Bereich ungefast ausgebildet. Sie weisen einen positiven Flankenwinkel von etwa 3° auf. Die Zähne 12 und 13 sind jeweils als Spanteilerzahn ausgebildet. Sie erbringen ihre Funktion aber jeweils nur auf einer Seite der Längsmittelebene des Sägebands 1. Somit wirken sie funktional wie ein Spanteilerzahn. In dieser Weise werden mit drei geometrisch unterschiedlich ausgebildeten Zähnen 10 fünf Schnittkanalabschnitte 18 erzeugt.

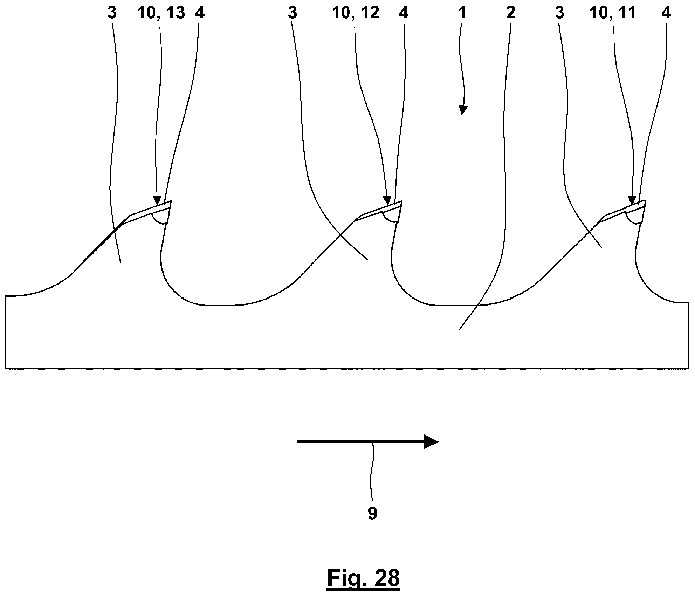

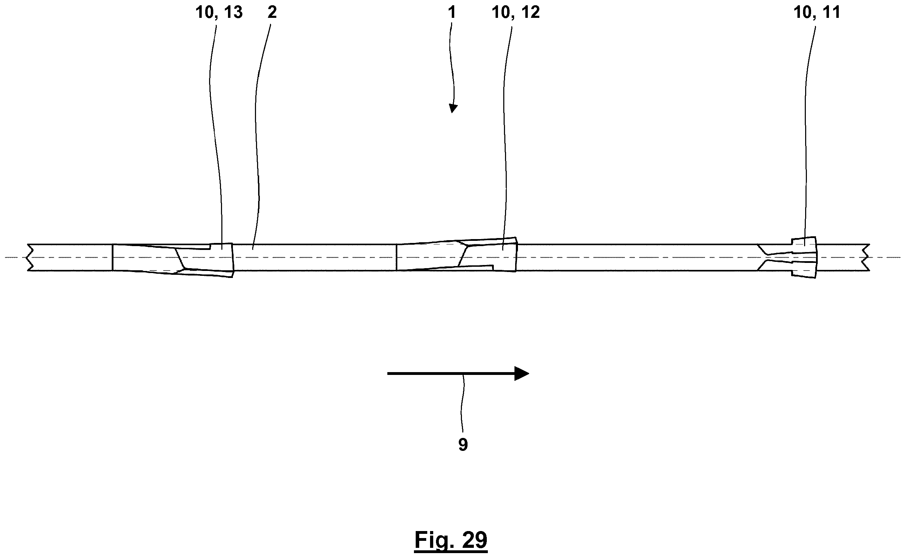

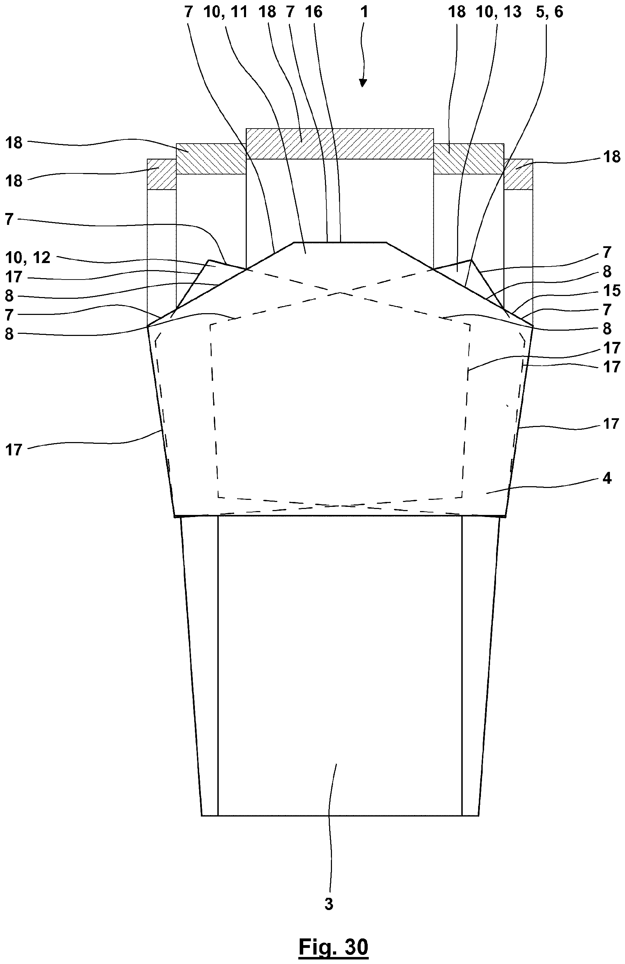

**Fig. 28-30** zeigen den Fig. 1, 2 und 4 entsprechende Ansichten einer weiteren beispielhaften Ausführungsform des Sägebands 1. Das Sägeband 1 weist drei geometrisch unterschiedlich ausgebildete Zähne 10 in der Gruppe auf. Der erste Zahn 11 weist einen Fasenwinkel von 30° auf. Der erste Zahn 11 ist als kombinierter Leistungs- und Oberflächenzahn und als positiv konischer Zahn ausgebildet. Der erste Zahn 11 weist einen Flankenwinkel von etwa 6° auf. Die Zähne 12 und 13 sind als geschränkte Zähne 10 ausgebildet. In diesem Fall ist der Zahn 12 nach links und der Zahn 13 nach rechts geschränkt. Die Zähne 12, 13 sind gefast ausgebildet und weisen einen Fasenwinkel von etwa 45° auf. Sie weisen weiterhin einen positiven Flankenwinkel von etwa 3° auf. Die Zähne 12 und 13 sind jeweils als Spanteilerzahn ausgebildet. Sie erbringen ihre Funktion aber jeweils nur auf einer Seite der Längsmittelebene des Sägebands 1. Somit wirken sie funktional wie ein Spanteilerzahn. In dieser Weise werden mit drei geometrisch unterschiedlich ausgebildeten Zähnen 10 fünf Schnittkanalabschnitte 18 erzeugt.

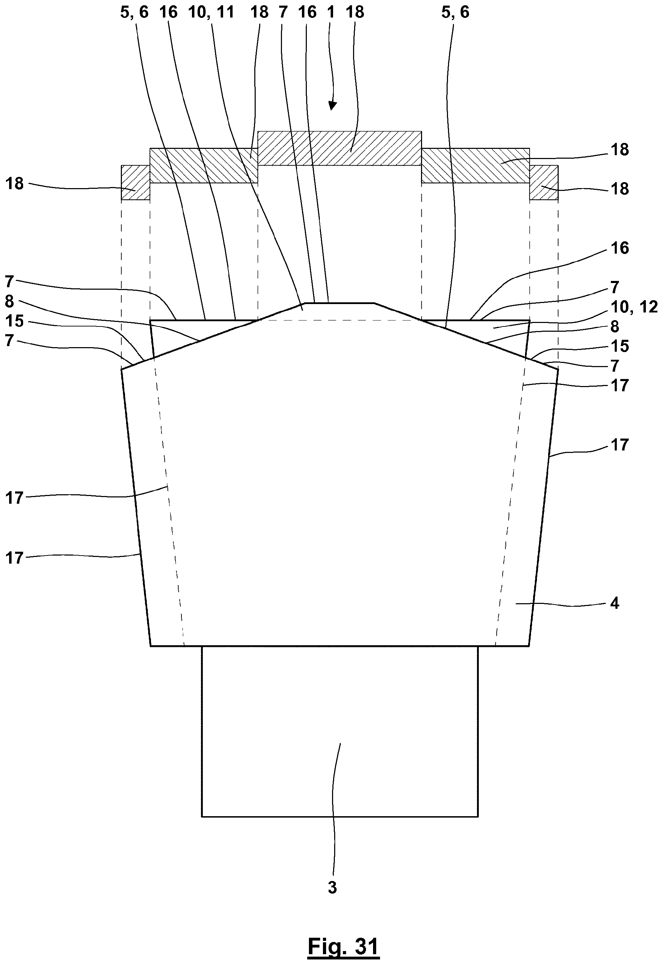

**Fig. 31** zeigt eine Fig. 4 entsprechende Ansicht einer weiteren beispielhaften Ausführungsform des Sägebands 1. Das Sägeband 1 weist zwei geometrisch unterschiedlich ausgebildete Zähne 10 in der Gruppe auf. Der erste Zahn 11 weist einen Fasenwinkel von etwa 20° auf. Der erste Zahn 11 ist als kombinierter Leistungs- und Oberflächenzahn und als positiv konischer Zahn ausgebildet. In dieser Weise werden mit zwei geometrisch unterschiedlich ausgebildeten Zähnen 10 fünf Schnittkanalabschnitte 18 erzeugt.

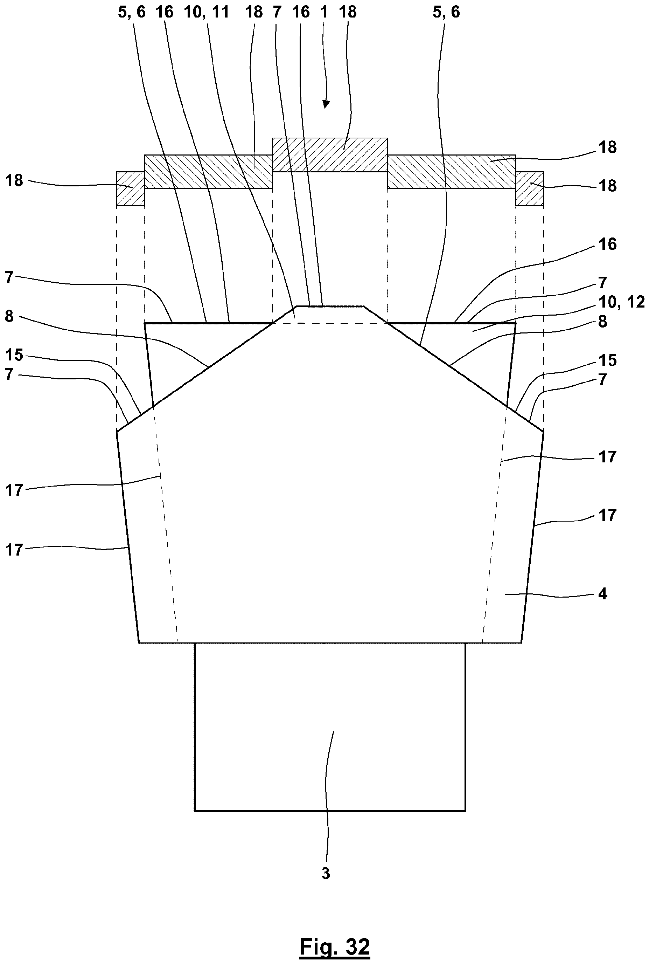

**Fig. 32** zeigt eine Fig. 4 entsprechende Ansicht einer weiteren beispielhaften Ausführungsform des Sägebands 1. Das Sägeband 1 weist zwei geometrisch unterschiedlich ausgebildete Zähne 10 in der Gruppe auf. Der erste Zahn 11 weist einen Fasenwinkel von etwa 35° auf. Der erste Zahn 11 ist als kombinierter Leistungs- und Oberflächenzahn und als positiv konischer Zahn ausgebildet. In dieser Weise werden mit zwei geometrisch unterschiedlich ausgebildeten Zähnen 10 fünf Schnittkanalabschnitte 18 erzeugt.

**BEZUGSZEICHENLISTE**

| 1 | Sägeband |
|---|---|
| 2 | Zahntragekörper |
| 3 | Vorsprung |
| 4 | Einsatz |
| 5 | Schneide |
| 6 | Schneidkante |
| 7 | Wirksamer Schneidkantenabschnitt |
| 8 | Unwirksamer Schneidkantenabschnitt |
| 9 | Bandlaufrichtung |
| 10 | Zahn |
| 11 | Erster Zahn |
| 12 | Zweiter Zahn |
| 13 | Dritter Zahn |
| 14 | Vierter Zahn |
| 15 | Fase |
| 16 | Gerader Abschnitt |
| 17 | Flanke |
| 18 | Schnittkanalabschnitt |

## Patentansprüche

1.  Sägeband (1) aus Metall, mit

    einem Zahntragekörper (2),
    nur drei geometrisch unterschiedlich ausgebildeten Zähnen (10) in einer sich entlang des Zahntragekörpers (2) wiederholenden Gruppe, nämlich einem ersten Zahn (10, 11), einem zweiten Zahn (10, 12) und einem dritten Zahn (10, 13), wobei

    der erste Zahn (10, 11) ein gefaster Zahn (10, 11) mit zwei im Bereich der Fase (15) angeordneten wirksamen Schneidkantenabschnitten (7) und einer an die Fase (15) anschließenden Flanke (17) ist, wobei der erste Zahn (10, 11) als kombinierter Leistungs- und Oberflächenzahn und als Zahn (10) mit der größten Höhe ausgebildet ist und der zweite Zahn (10, 12) eine Flanke (17) aufweist,
    der erste Zahn (10, 11) und der zweite Zahn (10, 12) als positiv konischer Zahn (10) ausgebildet ist,
    der zweite Zahn (10, 12) so ausgebildet und angeordnet ist, dass seine Flanke (17) in der Ansicht von vorne gesehen die Fase (15) des ersten Zahns (10, 11) schneidet und die Flanke (17) des ersten Zahns (10, 11) nicht überdeckt,
    zwischen den wirksamen Schneidkantenabschnitten (7) des ersten Zahns (10, 11) ein unwirksamer Schneidkantenabschnitt (8) des ersten Zahns (10, 11) gebildet ist, der durch den zweiten Zahn (10, 12) hervorgerufen ist, der diesen unwirksamen Schneidkantenabschnitt (8) überdeckt, sodass der zweite Zahn (10, 12) als Spanteilerzahn in Bezug auf den ersten Zahn (10, 11) ausgebildet ist, **dadurch gekennzeichnet, dass**

    der dritte Zahn (10, 13) als Spanteilerzahn in Bezug auf den zweiten Zahn (10, 12) ausgebildet ist, und
    die nur drei geometrisch unterschiedlich ausgebildeten Zähne (10) neun Schnittkanalabschnitte (18) ausbilden.

2.  Sägeband (1) nach Anspruch 1, **dadurch gekennzeichnet, dass** der zweite Zahn (10, 12) ungefast ist.

3.  Sägeband (1) nach mindestens einem der vorhergehenden Ansprüche, **dadurch gekennzeichnet, dass** der zweite Zahn (10, 12) ungeschränkt ist.

4.  Sägeband (1) nach mindestens einem der vorhergehenden Ansprüche, **dadurch gekennzeichnet, dass** zwei der Zähne (10) in der Gruppe geschränkt sind.

5.  Sägeband (1) nach mindestens einem der vorhergehenden Ansprüche, **dadurch gekennzeichnet, dass** der zweite Zahn (10, 12) so ausgebildet und angeordnet ist, dass seine Flanke (17) in der Ansicht von vorne gesehen die Fase (15) des ersten Zahns (10, 11) in einem Abstand von dem benachbarten äußeren Ende der Schneidkante (6) des ersten Zahns (10) in Richtung der Breite des Schnittkanals schneidet, der mindestens 5 % der Breite des Schnittkanals entspricht.

6.  Sägeband (1) nach mindestens einem der vorhergehenden Ansprüche, **dadurch gekennzeichnet, dass** das Sägeband (1) zum Sägen von Werkstücken aus Metall dient.

## Claims

1.  Saw band (1) of metal comprising

    a tooth supporting body (2),
    only three geometrically differently designed teeth (10) in a group being repeated along the tooth supporting body (2), namely a first tooth (10, 11), a second tooth (10, 12) and a third tooth (10, 13) wherein

    the first tooth (10, 11) is a chamfered tooth (10, 11) comprising two effective cutting edge portions (7) being arranged in the region of the chamfer (15) and a flank (17) following to the chamfer (15), the first tooth (10, 11) being a combined performance and surface tooth and being the tooth (10) having the greatest height and the second tooth (10, 12) including a flank (17),
    the first tooth (10, 11) and the second tooth (10, 12) being designed as positively conical tooth (10),
    the second tooth (10, 12) being designed and arranged such that its flank (17) in the view from the front intersects the chamfer (15) of the first tooth (10, 11) and does not overlap the flank (17) of the first tooth (10, 11),
    an ineffective cutting edge portion (8) of the first tooth is arranged between the effective cutting edge portions the first tooth (10, 11), the ineffective cutting edge portion (8) being caused by the second tooth (10, 12) overlapping this ineffective cutting edge portion (8) so that the second tooth (10, 12) is designed as a chip separator tooth in relation to the first tooth (10, 11), **characterised in that**

the third tooth (10, 13) is designed as a chip separator tooth in relation to the second tooth (10, 12) and
the only three geometrically differently designed teeth (10) provide nine cutting channel portions (18).

2. Saw band (1) of claim 1, **characterised in that** the second tooth (10, 12) is not chamfered.

3. Saw band (1) of at least one of the preceding claims, **characterised in that** the second tooth (10, 12) is unset.

4. Saw band (1) of at least one of the preceding claims, **characterised in that** two of the teeth (10) in the group are set.

5. Saw band (1) of at least one of the preceding claims, **characterised in that** the second tooth (10, 12) is designed and arranged such that its flank (17) in the view from the front intersects the chamfer (15) of the first tooth (10, 11) at a distance from the adjacent outer end of the cutting edge (6) of the first tooth (10) in the direction of the width of the cutting channel corresponding at least to 5 % of the width of the cutting channel.

6. Saw band (1) of at least one of the preceding claims, **characterised in that** the saw band (1) serves for sawing workpieces of metal.

**Revendications**

1. Lame de scie à ruban (1) en métal avec

un corps de support de dents (2),
seulement trois dents (10) de formes géométriques différentes dans un groupe se répétant le long du corps de support de dents (2), à savoir une première dent (10, 11), une deuxième dent (10, 12) et une troisième dent (10, 13), dans laquelle
la première dent (10, 11) est une dent chanfreinée (10, 11) avec deux portions d'arêtes tranchantes actives (7) disposées au niveau du chanfrein (15) et un flanc (17) se raccordant au chanfrein (15), dans lequel la première dent (10, 11) est conçue comme une dent de puissance et de surface combinée et comme une dent (10) avec la hauteur la plus grande et la deuxième dent (10, 12) présente un flanc (17),
la première dent (10, 11) et la deuxième dent (10, 12) sont conçues comme une dent positivement conique (10),
la deuxième dent (10, 12) est conçue et disposée de façon à ce que son flanc (17), en vue de devant, coupe le chanfrein (15) de la première dent (10, 11) et ne recouvre pas le flanc (17) de la première dent (10, 11),
entre les portions d'arêtes tranchantes actives (7) de la première dent (10, 11), est formée une portion d'arête tranchante inactive (8) de la première dent (10, 11), qui est produite par la deuxième dent (10, 12), qui recouvre cette portion d'arête tranchante inactive (8), de façon à ce que la deuxième dent (10, 12) soit conçue comme une dent diviseuse de copeaux par rapport à la première dent (10, 11), **caractérisée en ce que** la troisième dent (10, 13) est conçue comme une dent diviseuse de copeaux par rapport à la deuxième dent (10, 12) et
les seulement trois seulement trois dents (10) de formes géométriques différentes forment neuf portions de canaux de coupe (18).

2. Lame de scie à ruban (1) selon la revendication 1, **caractérisée en ce que** la deuxième dent (10, 12) n'est pas chanfreinée.

3. Lame de scie à ruban (1) selon au moins l'une des revendications précédentes, **caractérisée en ce que** la deuxième dent (10, 12) est non avoyée.

4. Lame de scie à ruban (1) selon au moins l'une des revendications précédentes, **caractérisée en ce que** deux des dents (10) du groupe sont avoyées.

5. Lame de scie à ruban (1) selon au moins l'une des revendications précédentes, **caractérisée en ce que** la deuxième dent (10, 12) est conçue et disposée de façon à ce que son flanc (17), en vue de devant, coupe le chanfrein (15) de la première dent (10, 11) à une distance de l'extrémité externe adjacente de l'arête tranchante (6) de la première dent (10) en direction de la largeur du canal de coupe, qui correspond à au moins 5 % de la largeur du canal de coupe.

6. Lame de scie à ruban (1) selon au moins l'une des revendications précédentes, **caractérisée en ce que** la lame de scie à ruban (1) sert à scier des pièces métalliques.

**Fig. 1**

Fig. 2

**Fig. 3**

5, 6  16  10, 11  18  7  7  16  1  18  7  5, 6  10, 12

18

18

18

18

16

7

7

4

17

17

8

8

7

15

15

7

4

17

17

**Fig. 4**

**Fig. 5**

**(Stand der Technik)**

**Fig. 6**

(Stand der Technik)

EP 3 356 073 B1

**Fig. 7**

22

**Fig. 8**

18  5, 6  16  7  10, 11  18  7  16  1  18  7  8  5, 6  18  10, 12  7

18

18

18

18

7
15
8
17
8
8

4
15
10, 13
17
4
8

7
15

15
7

17

4

17

3

**Fig. 9**

**Fig. 10**

**Fig. 11**

**Fig. 12**

**Fig. 13**

**Fig. 14**

5, 6  16  10, 11  18  7  16  1  18  7  5, 6  10, 12

18                                18

18                                18

16

7                                7

17                              17

8                                8

7                                15

15                                7

                                   17

17                                17

                                   4

3

**<u>Fig. 15</u>**

30

5, 6   16   10, 11   18   7   16   1   18   5, 6

18

18

18

18

16

7
10, 12

7
10, 13

17

17

8

17

8

7

15

15

7

17

17

17

4

3

**Fig. 16**

**Fig. 17**

**Fig. 18**

**Fig. 19**

5, 6  16  7  10, 11  18  7  16  1  18  10, 12  5, 6  18  10, 13

18

18

18                                                                              18

18                                                                              18

8

7

17                                                                              17

8                                                                               8

                                                                                15
                                                                                7

                                                                                17

17                                                                              17
                                                                                17

                                                                                4

3

**<u>Fig. 20</u>**

**Fig. 21**

5, 6  16  7  10, 11  18  7  16  1  18  10, 12  18  5, 6  18  10, 13

18

18

18

18

18

18

18

8

7

7

10, 14

17

17

8

8

15

7

17

17

17

17

17

17

4

3

**Fig. 22**

5, 6  16  7  10, 11  18  7  16  1  18  10, 12  5, 6  18  10, 13

18

18

7

17

8

8

17

7

8

17

7

15

17

17

4

3

**Fig. 23**

**Fig. 24**

**Fig. 25**

10, 13   2                    1   10, 12                      10, 11

9

**Fig. 26**

EP 3 356 073 B1

5, 6  16  7  10, 11  18  7  16  1  18  10, 13  5, 6

18

18

7

10, 12

17

8

8

15

10, 13

17

18

18

17

8

15

7

15

10, 12

17

17

17

4

3

**Fig. 27**

EP 3 356 073 B1

**Fig. 28**

**Fig. 29**

EP 3 356 073 B1

**7  10, 11  18  7  16      1      18  10, 13  5, 6**

18

18

7

10, 12
17
8
7
8

17

7
8
15
7
8
17
17

17

4

17

3

**Fig. 30**

**Fig. 31**

**Fig. 32**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4200423 A1
- DE 4300622 A1
- DE 19739074 A1
- DE 2516137 A1
- DE 102014205445 A1
- JP S56176126 U
- US 3576200 A
- WO 2006090828 A1
- JP 2009066730 A